# EUROPEAN PATENT APPLICATION

(11) **EP 4 815 354 A1**
(43) Date of publication of application: **30.09.2026**
(21) Application number: 24902438.1
(22) Date of filing: 05.11.2024
(51) Int. Cl.: H04L 5/00, H04W 72/23

(54) **COMMUNICATION METHOD AND COMMUNICATION APPARATUS**

(30) Priority: 12.12.2023 CN 202311717026
(71) Applicant: Huawei Technologies Co., Ltd., Shenzhen, Guangdong 518129 (CN)
(72) Inventor: JIANG, Jiyan, Shenzhen, Guangdong 518129 (CN); CAI, Shijie, Shenzhen, Guangdong 518129 (CN); LIU, Kunpeng, Shenzhen, Guangdong 518129 (CN)
(74) Representative: Huawei European IPR
(86) International application number: PCT/CN2024/130014
(87) International publication number: WO 2025/124014

(57) **Abstract**

This application provides a communication method and a communication apparatus. The method includes: receiving configuration information from a network device, where the configuration information indicates a transmission resource of a demodulation reference signal DMRS, the configuration information further indicates a quantity R of streams or M DMRSs transmitted on a first DMRS port, R is an integer greater than or equal to 1, M is an integer greater than 1, and the first DMRS port is a DMRS port corresponding to the transmission resource; and sending or receiving the R DMRSs on the transmission resource through the first DMRS port, or sending or receiving the M DMRSs on the transmission resource through the first DMRS port. According to this application, data transmission with a larger quantity of spatial streams can be supported without increasing additional DMRS overheads.

## Description

### COMMUNICATION METHOD AND COMMUNICATION APPARATUS

This application claims priority to Chinese Patent Application No. 202311717026.3, filed with the China National Intellectual Property Administration on December 12, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, in a demodulation reference signal (demodulation reference signal, DMRS) channel detection method, one DMRS may occupy one orthogonal frequency division multiplexing (orthogonal frequency division multiplexing, OFDM) symbol or two OFDM symbols. In this case, each OFDM symbol supports a maximum of 12 DMRS ports (that is, supports a maximum of 12-stream transmission). That is, two OFDM symbols support a maximum of 24-stream transmission.

During evolution from a low frequency (sub-6 GHz) to a high frequency (above 6 GHz), a quantity of spatial transmission streams continuously increases with an expansion of an antenna array scale. A quantity of data transmission streams in space increases by five times from 10 to 20, and a peak quantity of streams is close to 100. To ensure data transmission performance, a quantity of OFDM symbols occupied by a DMRS may be increased, for example, increased by four times from two OFDM symbols to eight OFDM symbols. In this way, a maximum of 96-stream transmission can be supported. However, this manner causes a linear increase of DMRS overheads, and occupies a large quantity of air interface resources in a hundred-stream transmission scenario, thereby severely affecting a data transmission capacity.

### SUMMARY

This application provides a communication method and a communication apparatus. Based on the method described in this application, data transmission with a larger quantity of spatial streams can be supported without increasing additional DMRS overheads.

According to a first aspect, this application provides a communication method. The method includes: receiving configuration information from a network device, where the configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource; and sending or receiving the R DMRSs on the transmission resource through the first DMRS port, or sending or receiving the M DMRSs on the transmission resource through the first DMRS port.

Based on the method described in the first aspect, a terminal device can share one DMRS port, and each DMRS port corresponds to a scalar sequence whose length is a quantity of streams, to distinguish between different transmission streams, so that data transmission with a larger quantity of spatial streams can be supported. In addition, a data transmission capacity is increased without increasing additional DMRS overheads.

In a possible implementation, the R DMRSs corresponding to the terminal device are different, and a sum of powers of the R DMRSs corresponding to the terminal device is 1. Alternatively, the M DMRSs corresponding to the terminal device are different, and a sum of powers of the M DMRSs corresponding to the terminal device is less than 1. Based on this manner, different transmission streams are distinguished without increasing additional DMRS overheads.

In a possible implementation, the transmission resource is of a comb structure, and two adjacent combs in the transmission resource have a same frequency domain spacing; and the sending or receiving the R DMRSs on the transmission resource through the first DMRS port, or sending or receiving the M DMRSs on the transmission resource through the first DMRS port includes: sending or receiving the R DMRSs on each comb in the transmission resource through the first DMRS port, or sending or receiving the M DMRSs on each comb in the transmission resource through the first DMRS port. Based on this manner, data transmission with a larger quantity of spatial streams can be supported.

In a possible implementation, each comb includes a plurality of code domain resources; and the R DMRSs occupy one of the plurality of code domain resources, or the M DMRSs occupy one of the plurality of code domain resources. Based on this manner, data transmission with a larger quantity of spatial streams can be supported.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{f} \left(l′\right) r \left(4n+k′\right) ,$ where
*q*(*s*) is a real pilot sequence or a complex pilot sequence, *R* represents a quantity of streams transmitted on the first DMRS port, *Z*(*R*) represents a normalization coefficient, *s* represents an sth DMRS, *w_{f}*(*k'*) represents a frequency-domain spreading sequence of the first DMRS port, *wₜ*(*l*') represents a time-domain spreading sequence of the first DMRS port, and *r(4n + k')* represents a frequency-domain sequence of the transmission resource.

In a possible implementation, the transmission resource is of a non-comb structure, and the transmission resource includes a plurality of code domain resources; and the R DMRSs occupy one of the plurality of code domain resources, or the M DMRSs occupy one of the plurality of code domain resources. Based on this manner, data transmission with a larger quantity of spatial streams can be supported.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) ,$ where
*q*(*s*) is a real pilot sequence or a complex pilot sequence, *R* represents a quantity of streams transmitted on the first DMRS port, *Z*(*R*) represents a normalization coefficient, and *s* represents an *s*th DMRS.

In a possible implementation, *q(s)* is a real pilot sequence, *q*(*s*) *=* 2*R* - 2*s* - 1, and *R* and *Z*(*R*) have a first association relationship.

In a possible implementation, *q*(*s*) is a complex pilot sequence, and *q*(*s*)*, R ,* and *Z*(*R*) have a second association relationship.

According to a second aspect, this application provides a communication method. The method includes: sending configuration information to a terminal device, where the configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource; and sending or receiving the R DMRSs on the transmission resource through the first DMRS port, or sending or receiving the M DMRSs on the transmission resource through the first DMRS port.

For beneficial effects of possible implementations of the second aspect, refer to the beneficial effects of the possible implementations of the first aspect. Details are not described herein again.

In a possible implementation, there is one terminal device, R DMRSs corresponding to one terminal device are different, and a sum of powers of the R DMRSs corresponding to one terminal device is 1.

In a possible implementation, there are a plurality of terminal devices, a total quantity of DMRSs corresponding to the plurality of terminal devices is R, the R DMRSs are different, and a sum of powers of the R DMRSs is 1. M DMRSs corresponding to a first terminal device are different, a sum of powers of the M DMRSs corresponding to the first terminal device is less than 1, the first terminal device is one of the plurality of terminal devices, and M is less than R.

In a possible implementation, the transmission resource is of a comb structure, and two adjacent combs in the transmission resource have a same frequency domain spacing; and the sending or receiving the R DMRSs on the transmission resource through the first DMRS port, or sending or receiving the M DMRSs on the transmission resource through the first DMRS port includes: sending or receiving the R DMRSs on each comb in the transmission resource through the first DMRS port, or sending or receiving the M DMRSs on each comb in the transmission resource through the first DMRS port.

In a possible implementation, each comb includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{f} \left(l′\right) r \left(4n+k′\right) ,$ where
*q*(*s*) is a real pilot sequence or a complex pilot sequence, *R* represents a quantity of streams transmitted on the first DMRS port, *Z*(*R*) represents a normalization coefficient, *s* represents an *s*th DMRS, *w_{f}(k')* represents a frequency-domain spreading sequence of the first DMRS port, *wₜ*(*l*') represents a time-domain spreading sequence of the first DMRS port, and *r(4n + k')* represents a frequency-domain sequence of the transmission resource.

In a possible implementation, the transmission resource is of a non-comb structure, and the transmission resource includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) ,$ where
*q*(*s*) is a real pilot sequence or a complex pilot sequence, R represents a quantity of streams transmitted on the first DMRS port, *Z*(*R*) represents a normalization coefficient, and *s* represents an *s*th DMRS.

In a possible implementation, *q(s)* is a real pilot sequence, *q* (*s*) *=* 2*R* - 2*s* - 1, and R and *Z*(*R*) have a first association relationship.

In a possible implementation, *q(s)* is a complex pilot sequence, and *q*(*s*), *R,* and *Z*(*R*) have a second association relationship.

According to a third aspect, this application provides a communication apparatus. The communication apparatus includes a processor, and when the processor invokes a computer program in a memory, the method according to the first aspect or the second aspect is performed.

According to a fourth aspect, this application provides a communication apparatus. The communication apparatus includes a processor and a memory, the processor is coupled to the memory, and the processor is configured to implement the method according to the first aspect or the second aspect.

According to a fifth aspect, this application provides a communication apparatus. The communication apparatus includes a processor, a memory, and a transceiver, the processor is coupled to the memory, the transceiver is configured to receive and send data, and the processor is configured to implement the method according to the first aspect or the second aspect.

According to a sixth aspect, this application provides a chip. The chip includes a processor and an interface, the processor is coupled to the interface, the interface is configured to receive or output a signal, and the processor is configured to execute code instructions, so that the method according to the first aspect or the second aspect is performed.

According to a seventh aspect, this application provides a computer-readable storage medium. The storage medium stores a computer program or instructions; and when the computer program or the instructions are executed by a communication apparatus, the method according to the first aspect or the second aspect is implemented.

According to an eighth aspect, this application provides a communication system. The communication system includes a terminal device and a network device. The terminal device is configured to perform the method according to the first aspect, and the network device is configured to perform the method according to the second aspect.

According to a ninth aspect, this application provides a computer program product including instructions. When a computer reads and executes the computer program product, the computer is enabled to perform the method according to the first aspect or the second aspect.

### BRIEF DESCRIPTION OF DRAWINGS

FIG. 1 is a diagram of a communication system according to an embodiment of this application;
FIG. 2A is a diagram of a type 1 DMRS pilot pattern used for PDSCH transmission according to an embodiment of this application;
FIG. 2B is a diagram of a type 2 DMRS pilot pattern used for PDSCH transmission according to an embodiment of this application;
FIG. 3 is a schematic flowchart of PDSCH channel estimation according to an embodiment of this application;
FIG. 4 is a schematic flowchart of a communication method according to an embodiment of this application;
FIG. 5 is a diagram of a design of a pilot signal eliminating ambiguity according to an embodiment of this application;
FIG. 6A is a diagram of a transmission resource according to an embodiment of this application;
FIG. 6B(1) to FIG. 6B(3) are a diagram of another transmission resource according to an embodiment of this application;
FIG. 6C is a diagram of a single-symbol DMRS pilot pattern of a non-comb structure according to an embodiment of this application;
FIG. 6D is a diagram of a double-symbol DMRS pilot pattern of a non-comb structure according to an embodiment of this application;
FIG. 7A is a diagram of another transmission resource according to an embodiment of this application;
FIG. 7B(1) and FIG. 7B(2) are a diagram of another transmission resource according to an embodiment of this application;
FIG. 8 is a schematic flowchart of another communication method according to an embodiment of this application;
FIG. 9 is a schematic flowchart of another communication method according to an embodiment of this application;
FIG. 10A is a diagram of another transmission resource according to an embodiment of this application;
FIG. 10B(1) to FIG. 10B(3) are a diagram of another transmission resource according to an embodiment of this application;
FIG. 11A is a diagram of another transmission resource according to an embodiment of this application;
FIG. 11B(1) and FIG. 11B(2) are a diagram of another transmission resource according to an embodiment of this application;
FIG. 12 is a schematic flowchart of another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of a chip according to an embodiment of this application.

### DESCRIPTION OF EMBODIMENTS

Terms "first", "second", and the like in the specification, claims, and accompanying drawings of this application are used to distinguish between different objects, and are not used to describe a specific sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent a, b, c, "a and b", "a and c", "b and c", or "a, b, and c", where a, b, and c may be a singular or plural.

To better understand embodiments of this application, the following first describes a system architecture in embodiments of this application.

The technical solutions in embodiments of this application may be applied to various communication systems such as a satellite communication system and a conventional mobile communication system. The satellite communication system may be integrated with the conventional mobile communication system (namely, a terrestrial communication system). The mobile communication system includes, for example, a wireless local area network (wireless local area network, WLAN) communication system, a wireless fidelity (wireless fidelity, Wi-Fi) system, a multiple-input multiple-output (multiple-in multiple-out, MIMO) communication system, a long-term evolution (long-term evolution, LTE) system, an LTE frequency division duplex (frequency division duplex, FDD) system, an LTE time division duplex (time division duplex, TDD) system, a 5th generation (5th generation, 5G) system or a new wireless (new radio, NR) system, and another future communication system such as a 6th generation (6th generation, 6G) system. A communication system that integrates a plurality of wireless technologies is further supported. For example, the mobile communication system may be further applied to a system that integrates a terrestrial mobile communication network and a non-terrestrial network (non-terrestrial network, NTN) such as an unmanned aerial vehicle, a satellite communication system, or high-altitude platform station (high-altitude platform station, HAPS) communication. In addition, the technical solutions may also be applicable to a low frequency (sub-6 GHz) and a high frequency (above 6 GHz) communication scenario. It may be understood that the system architecture described in embodiments of this application is intended to describe the technical solutions in embodiments of this application more clearly, and does not constitute a limitation on the technical solutions provided in embodiments of this application.

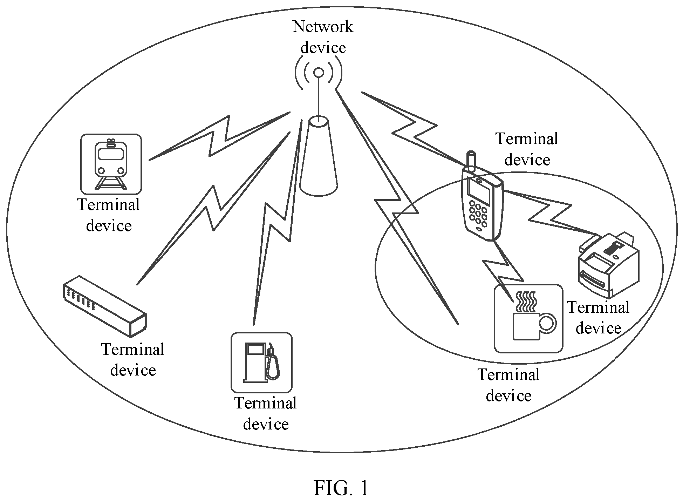

FIG. 1 is a diagram of a communication system applicable to an embodiment of this application. The communication system includes at least one network device and at least one terminal device. In FIG. 1, a network device and a plurality of terminal devices are used as an example. The plurality of terminal devices may be a cellular phone, a smartphone, a portable computer, a handheld communication device, a handheld computing device, a satellite radio apparatus, a global positioning system, a personal digital assistant (personal digital assistant, PDA), and/or any other suitable device configured to perform communication in a wireless communication system. All of the terminal devices may be connected to the network device. All of the terminal devices can communicate with the network device. In addition, communication, for example, device-to-device (device-to-device, D2D) transmission, may also be performed between a terminal device and another terminal device. Certainly, a quantity of terminal devices and a quantity of network devices in FIG. 1 are merely an example, and there may alternatively be more or fewer terminal devices and more or fewer network devices. The following separately describes in detail the terminal device and the network device in the communication system in FIG. 1.

### I. Terminal device

The terminal device mentioned in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a PDA, a handheld device having a wireless communication function, a computing device or another processing device connected to the wireless modem, a vehicle-mounted device, a communication device mounted on a high-altitude aircraft, a wearable device, an unmanned aerial vehicle, a robot, a terminal in D2D communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application. In addition, in this application, unless otherwise specified, the "terminal device" may be the terminal device itself, or may be a component of the terminal device, for example, a chip system or an SoC. The component may be installed in the terminal device.

### II. Network device

The network device in embodiments of this application has a wireless transceiver function, is configured to communicate with a terminal, and may be specifically a base station (base station), an evolved NodeB (evolved NodeB, eNodeB), a transmission-reception point (transmission reception point, TRP), a next generation NodeB (next generation NodeB, gNB) in a 5G mobile communication system, a next-generation base station in a 6th generation (6th generation, 6G) mobile communication system, an access network device or a module of an access network device in an open access network (open RAN, ORAN) system, a base station in a future mobile communication system, an access node in a Wi-Fi system, or the like. The network device may alternatively be a module or a unit that can implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, a CU-CP may also be referred to as an O-CU-CP, a CU-UP may also be referred to as an O-CU-UP, and the RU may also be referred to as an O-RU. For example, the base station in embodiments of this application may include various forms of base stations, for example, a macro base station, a micro base station (also referred to as a small cell), a relay station, an access point, a gNodeB (gNodeB, gNB), a transmitting and receiving point (transmitting and receiving point, TRP), a transmitting point (transmitting point, TP), and a mobile switching center. Alternatively, the base station may be a device or the like that undertakes a wireless access function in device-to-device (Device-to-Device, D2D) communication, vehicle-to-everything (vehicle-to-everything, V2X) communication, machine-to-machine (machine-to-machine, M2M) communication, or internet of things (Internet of Things) communication. In addition, in this application, unless otherwise specified, the "network device" may be the network device itself, or may be a component of the network device, for example, a chip system or a system-on-a-chip (system-on-a-chip, SoC). The component may be installed in the network device.

For ease of understanding the solutions provided in embodiments of this application, the following describes related concepts in embodiments of this application.

### 1. Demodulation reference signal (demodulation reference signal, DMRS)

The DMRS is used to estimate an equivalent channel matrix of a data channel or a control channel for data detection and demodulation. For example, the data channel may be a physical downlink shared channel (physical downlink shared channel, PDSCH) or a physical uplink shared channel (physical uplink shared channel, PUSCH). For example, the control channel may be a physical downlink control channel (physical downlink control channel, PDCCH). The data channel PDSCH is used as an example. Same precoding is usually performed on the DMRS and a sent data signal, to ensure that the DMRS and data pass through a same equivalent channel.

It is assumed that a DMRS vector sent by a transmit end is *s*, a sent data signal vector (or referred to as a data symbol) is *x*, same precoding (for example, multiplying by a same precoding matrix *P*) is performed on the DMRS and data, and the precoded data signal and the DMRS are simultaneously transmitted and pass through a same channel. Corresponding signal vectors received by a receive end may be represented as:
data: *y=HPx+n=H̃x+n;* and
DMRS: *r = HPs + n = H̃s + n,* where
*y* represents a data signal vector received by the receive end, *r* represents a DMRS vector received by the receive end, *H* represents a channel that the data signal and the DMRS actually pass through, *P* represents a precoding matrix, and *n* represents a noise signal vector.

Because both the data and the DMRS pass through an equivalent channel *H̃*, the receive end may obtain, based on the known DMRS vector *s* and by using a channel estimation algorithm, estimation of the equivalent channel. The DMRS vector includes DMRS symbols corresponding to a plurality of DMRS ports. Further, the receive end can complete data detection and demodulation based on the equivalent channel. The channel estimation algorithm may be, for example, a least square (least square, LS) channel estimation algorithm, a minimum mean square error (minimum mean square error, MMSE) channel estimation algorithm, or a delay domain channel estimation algorithm based on discrete Fourier transform (discrete Fourier transform, DFT)/inverse discrete Fourier transform (inverse DFT, IDFT).

### 2. DMRS port

The port may be an antenna port (antenna port), and the port may be understood as a transmit antenna identified by a receive end, or a transmit antenna that can be distinguished in space. One port may be configured for each virtual antenna, and each virtual antenna may be a weighted combination of a plurality of physical antennas. A port used to send a reference signal may be referred to as a reference signal port. The reference signal may be, for example, a DMRS, a channel state information reference signal (channel state information reference signal, CSI-RS), or a sounding reference signal (sounding reference signal, SRS). This is not specifically limited. A DMRS port is used as an example. Different DMRS ports may be distinguished by using different indexes (or port numbers).

In embodiments of this application, descriptions are provided by using an example in which a port is a DMRS port. It may be understood that, in addition to the DMRS port, the method provided in embodiments of this application may also be applicable to another possible reference signal port, for example, a CSI-RS port or an SRS port.

### 3. DMRS configuration type

The DMRS configuration type may include a configuration type 1 (type 1) and a configuration type 2 (type 2). Different configuration types support different numbers of orthogonal DMRS ports and different time-frequency resource mapping rules.

When a plurality of parallel data streams are simultaneously transmitted on a same time-frequency resource, each data stream may be referred to as a spatial layer, a spatial stream, or a transmission stream, and one DMRS port may correspond to one spatial layer or transmission stream. A time domain symbol length occupied by a DMRS port (or a quantity of time domain symbols occupied by the DMRS port) may be 1 or 2. When the time domain symbol length occupied by the DMRS port is 1, a DMRS may be referred to as a single-symbol DMRS. When the time domain symbol length occupied by the DMRS port is 2, a DMRS may be referred to as a double-symbol DMRS.

For the type 1, a single-symbol DMRS supports a maximum of four orthogonal DMRS ports, and a double-symbol DMRS supports a maximum of eight orthogonal DMRS ports. For the type 2, a single-symbol DMRS supports a maximum of six orthogonal DMRS ports, and a double-symbol DMRS supports a maximum of 12 orthogonal DMRS ports. For example, X transmission streams include a transmission stream 0 and a transmission stream 1. When a DMRS port index allocated by a network device to a terminal device is "0, 1", the transmission stream 0 corresponds to a DMRS port 0, and the transmission stream 1 corresponds to a DMRS port 1. When a DMRS port index allocated by the network device to the terminal device is "2, 3", the transmission stream 0 corresponds to a DMRS port 2, and the transmission stream 1 corresponds to a DMRS port 3.

With continuous development of communication technologies, 12 DMRS ports are increasingly unable to satisfy a communication requirement. Therefore, in release R18, a quantity of DMRS ports is increased (or referred to as expansion). In a manner, a DMRS in the type 1 may be enhanced. After the type 1 is enhanced, an upper limit of a quantity of DMRS ports corresponding to a single-symbol DMRS may be 8, and an upper limit of a quantity of DMRS ports corresponding to a double-symbol DMRS may be 16. In another manner, a DMRS in the type 2 may be enhanced. After the type 2 is enhanced, an upper limit of a quantity of DMRS ports corresponding to a single-symbol DMRS may be 12, and an upper limit of a quantity of DMRS ports corresponding to a double-symbol DMRS may be 24.

Each transmission stream of each UE corresponds to one DMRS port, and several DMRS ports form a group. Each group of DMRS ports sends DMRSs on a same RE, occupies one or more OFDM symbols in each timeslot in time domain, sends DMRSs at a specific interval in frequency domain, and is of a comb structure. Different port groups are distinguished in frequency domain by using different combs.

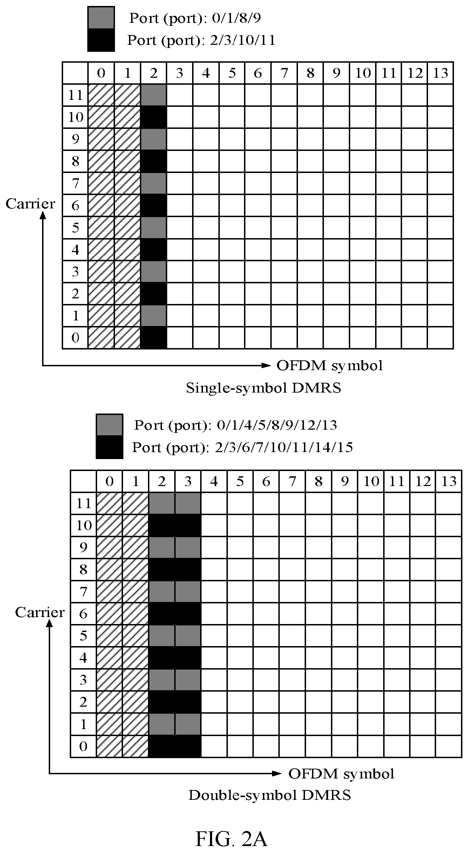

For example, as shown in FIG. 2A, FIG. 2A is a diagram of a type 1 DMRS pilot pattern used for PDSCH transmission according to an embodiment of this application. For a single-symbol DMRS in a PDSCH DMRS type 1 pilot pattern, a first group of DMRS ports includes ports 0, 1, 8, and 9, a second group of DMRS ports includes ports 2, 3, 10, and 11, and the first group of DMRS ports and the second group of DMRS ports are distinguished in frequency domain by using different combs. For a double-symbol DMRS in the PDSCH DMRS type 1 pilot pattern, a first group of DMRS ports includes ports 0, 1, 4, 5, 8, 9, 12, and 13, a second group of DMRS ports includes ports 2, 3, 6, 7, 10, 11, 14, and 15, and the first group of DMRS ports and the second group of DMRS ports are distinguished in frequency domain by using different combs.

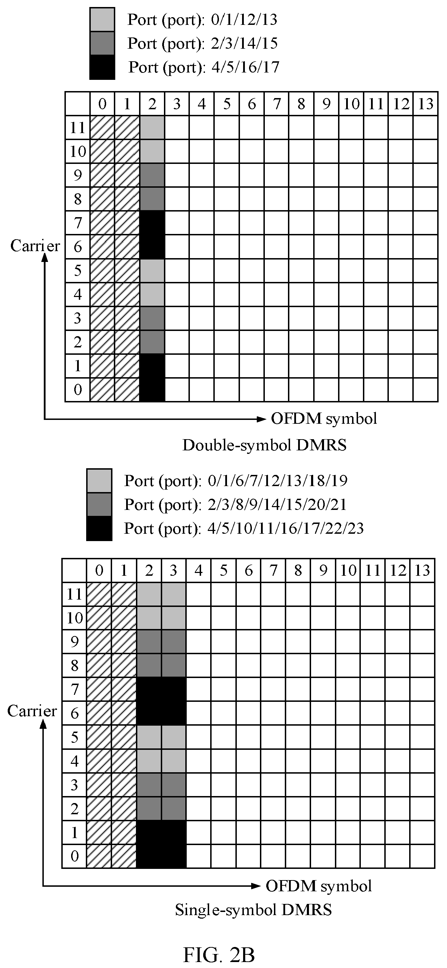

For example, as shown in FIG. 2B, FIG. 2B is a diagram of a type 2 DMRS pilot pattern used for PDSCH transmission according to an embodiment of this application. For a single-symbol DMRS in a PDSCH DMRS type 2 pilot pattern, a first group of DMRS ports includes ports 0, 1, 12, and 13, a second group of DMRS ports includes ports 2, 3, 14, and 15, a third group of DMRS ports includes ports 4, 5, 16, and 17, and the first group of DMRS ports, the second group of DMRS ports, and the third group of DMRS ports are distinguished in frequency domain by using different combs. For a double-symbol DMRS in the PDSCH DMRS type 2 pilot pattern, a first group of DMRS ports includes ports 0, 1, 6, 7, 12, 13, 18, and 19, a second group of DMRS ports includes ports 2, 3, 8, 9, 14, 15, 20, and 21, a third group of DMRS ports includes ports 4, 5, 10, 11, 16, 17, 22, and 23, and the first group of DMRS ports, the second group of DMRS ports, and the third group of DMRS ports are distinguished in frequency domain by using different combs.

### 4. Time-frequency resource mapping of a DMRS port

For one DMRS port, the DMRS port may correspond to one or more DMRS signal symbols (which may also be referred to as DMRS modulation symbols, or referred to as DMRS symbols for short). To perform channel estimation on different time-frequency resources, a plurality of DMRS symbols corresponding to the DMRS port may be sent on a plurality of time-frequency resources. In addition, to ensure channel estimation quality, different DMRS ports are usually orthogonal ports, to avoid interference between the different DMRS ports.

A plurality of DMRS symbols corresponding to one DMRS port may correspond to one DMRS sequence, and one DMRS sequence includes a plurality of DMRS sequence elements. A DMRS sequence corresponding to one DMRS port may be mapped to a corresponding time-frequency resource according to a time-frequency resource mapping rule after being multiplied by a corresponding cover code sequence. For example, for a DMRS port *p*, an mth DMRS sequence element r(m) in a DMRS sequence corresponding to the DMRS port *p* may be mapped, according to the time-frequency resource mapping rule, to a resource element (resource element, RE) with an index of (*k,l*)*_{p,µ}.* The RE with an index of (*k,l*)*_{p,µ}* may correspond to a time domain symbol with an index of *l* in a slot in time domain, and correspond to a subcarrier with an index of *k* in frequency domain. The time-frequency resource mapping rule may satisfy the following formula 1: ${a}_{k , l}^{\left(p, μ\right)} = {w}_{f} \left(k′\right) {w}_{t} \left(l′\right) r \left(4n+k′\right)$

In the formula (1), $k = \left\{\begin{matrix}8 n + 2 k ′ + Δ & single - symbol \\ 12 n + k ′ + Δ & double - symbol , k ′ = 0 , 1 \\ 12 n + k ′ + Δ + 4 & double - symbol , k ′ = 2 , 3\end{matrix}\right.$
*k' =* 0,1,2,3
*l=l+l'*
*n =*0,1,2,...
*p =*0,1,2,...

*µ* represents a subcarrier spacing parameter; *k* represents a frequency domain location (namely, a subcarrier index) for sending a DMRS; *l* represents a time domain location (namely, an OFDM symbol index) for sending the DMRS; ${a}_{k , l}^{\left(p, μ\right)}$ represents a DMRS modulation symbol that is mapped to the RE with an index of (*k,l*)*_{p,µ}* and that corresponds to the *port p; l̅* represents a symbol index of a start OFDM symbol occupied by the DMRS modulation symbol or a symbol index of a reference OFDM symbol; *r*(4*n + k'*) represents a frequency domain sequence; Δ represents a number of a comb occupied by a current port group, and different port groups occupy different combs to perform frequency division multiplexing; *w_{f}*(*k'*) represents a spreading sequence of a frequency domain of the DMRS port *p* (namely, a frequency domain cover code element corresponding to a subcarrier with an index of *k'*); and *wₜ*(*l'*) represents a spreading sequence of a time domain of the DMRS port *p* (namely, a time domain cover code element corresponding to an OFDM symbol with an index of *l'*), and each port of a current port group performs code division multiplexing on a same RE by using different spreading sequences.

### 5. Channel estimation

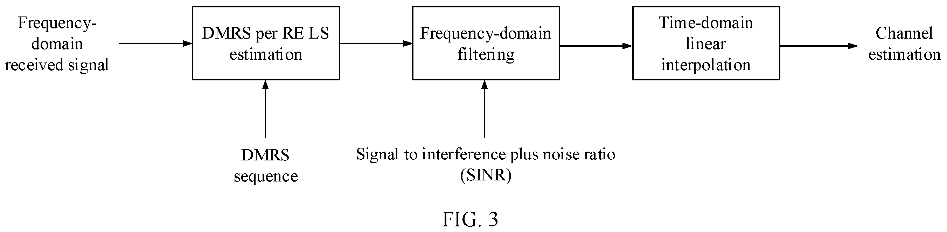

The channel estimation is a process of estimating a model parameter of an assumed channel model from received data. The terminal device may perform channel estimation by using a DMRS received by the foregoing RE. A common detection procedure is shown in FIG. 3. For example, FIG. 3 is a schematic flowchart of PDSCH channel estimation according to an embodiment of this application. For an RE, a DMRS received by a terminal device may be written as a formula (2): ${y}_{p} \left(k, l\right) = {\sum }_{j = 0}^{ν} {A}_{j} \left(k, l\right) {a}_{j} \left(k, l\right) + {N}_{p} \left(k, l\right)$

In the formula (2), *Aⱼ*(*k*,*l*) represents an equivalent channel with precoding, and *Nₚ(k,l)* represents noise and other interference. Because an orthogonal time domain spreading sequence is used, the terminal device first performs despreading to obtain a formula (3): ${y}_{p}^{′} \left(k\right) = {A}_{p} \left(k\right) r \left(4n+k′\right) + {N}_{p}^{′} \left(k\right)$

Then, an equivalent channel *Aₚ*(*k*) at each comb on each OFDM symbol is estimated by using LS. For an OFDM symbol, a frequency-domain received signal model is a formula (4): ${Y}_{p} = {A}_{p} {X}_{p} + {N}_{p}$

By using channel estimation *Aₚ^{RS}* of the DMRS at the RE, a channel estimation result *Aₚ^{D}* on a data RE may be obtained through frequency-domain filtering and time-domain linear interpolation, and is used for subsequent MIMO equalization and data restoration.

Based on the foregoing description, in a current DMRS channel detection method, a DMRS may occupy one OFDM symbol or two OFDM symbols. In this case, each OFDM symbol supports a maximum of 12 DMRS ports (that is, supports a maximum of 12-stream transmission). That is, two OFDM symbols support a maximum of 24-stream transmission. During evolution from a low frequency (sub-6 GHz) to a high frequency (above 6 GHz), a quantity of spatial transmission streams continuously increases with an expansion of an antenna array scale. A quantity of data transmission streams in space increases by five times from 10 to 20, and a peak quantity of streams is close to 100. To ensure data transmission performance, a quantity of OFDM symbols occupied by a DMRS may be increased, for example, increased by four times from two OFDM symbols to eight OFDM symbols. In this way, a maximum of 96-stream transmission can be supported. However, this manner causes a linear increase of DMRS overheads, and occupies a large quantity of air interface resources in a hundred-stream transmission scenario, thereby severely affecting a data transmission capacity.

To support data transmission with a larger quantity of spatial streams without increasing additional DMRS overheads, this application provides a communication method and a communication apparatus. The following further describes in detail the communication method and the communication apparatus provided in embodiments of this application.

### I. A plurality of streams of one terminal device occupy a same time-frequency resource.

### 1. Downlink transmission

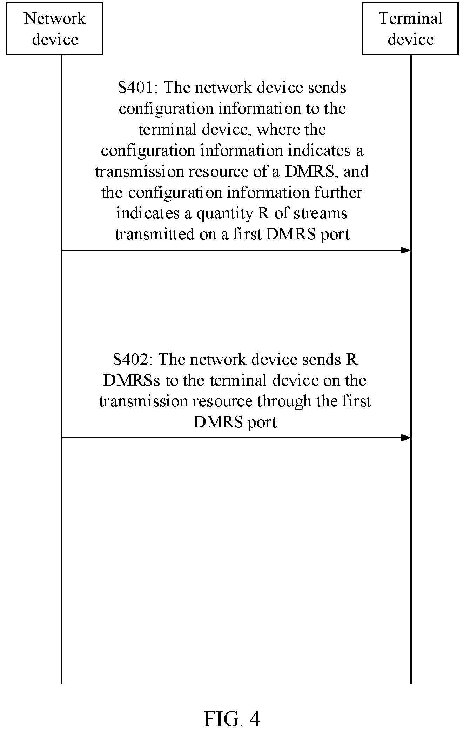

FIG. 4 is a schematic flowchart of a communication method according to an embodiment of this application. As shown in FIG. 4, the communication method includes the following step S401 and S402. For a terminal device, the method shown in FIG. 4 may be performed by the terminal device and a network device. Alternatively, the method shown in FIG. 4 may be performed by a chip in the terminal device and a chip in the network device. This is not limited in this embodiment of this application. In FIG. 4, an example in which the method is performed by the terminal device and the network device is used for description. It should be noted that in this embodiment of this application, an example in which a pilot signal is a DMRS is used for description.

S401: The network device sends configuration information to the terminal device, where the configuration information indicates a transmission resource of a DMRS, and the configuration information further indicates a quantity R of streams transmitted on a first DMRS port. Correspondingly, the terminal device receives the configuration information from the network device.

S402: The network device sends R DMRSs to the terminal device on the transmission resource through the first DMRS port. Correspondingly, the terminal device receives the R DMRSs from the network device.

In this embodiment of this application, based on the foregoing description, it is assumed that a frequency-domain received signal model is *Y* =*AX +N* . A feasible idea for reducing DMRS overheads is to use a received data signal to assist in channel estimation. For example, a blind detection method is a DMRS pilot-free method, and a principle of the blind detection method is to perform channel estimation by using constellation diagram information carried after a data signal is modulated.

Maximum likelihood (maximum likelihood, ML) detection is used as an example. For an n-stream transmission problem, assuming that noise follows a complex Gaussian distribution, an ML detector is used to estimate both an equivalent channel A and a data signal X. A channel estimation problem is defined as: ${min}_{A , X ∈ G} {\left‖Y-AX\right‖}^{2}$, where *G* is a transmit constellation diagram.

Due to symmetry of *G* , the blind detection method has a detection ambiguity problem. A quadrature amplitude modulation (quadrature amplitude modulation, QAM) constellation diagram is used as an example. An n-stream constellation diagram is a complex cube with an n-order contour and a set of points symmetric about a coordinate axis and a center in high-dimensional negative space *Cⁿ*. Channel estimation obtained directly by using the blind detection method cannot distinguish between axisymmetric transform and centrosymmetric transform. For example, according to Y=AX=(-A)(-X), it is impossible to distinguish which of (A, X) and (-A, -X) is correct estimation.

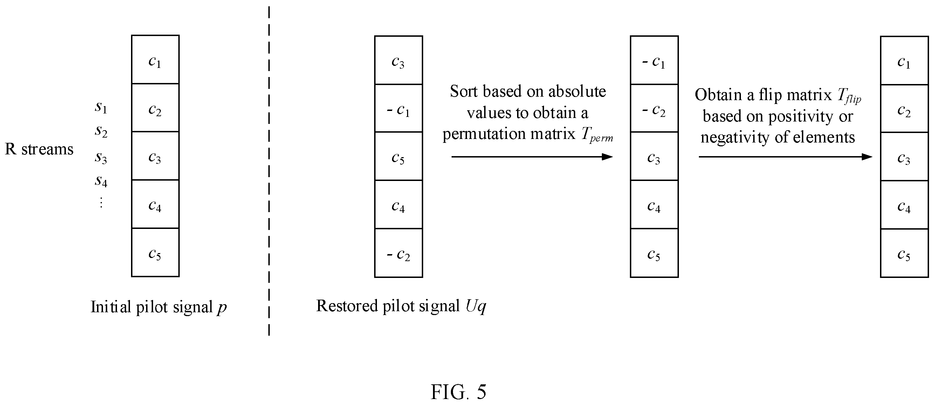

To eliminate the foregoing ambiguity, a pilot signal is needed to provide additional information. This application proposes a method for eliminating the blind detection ambiguity. As shown in FIG. 5, it is assumed that an initial pilot signal is *p*, and has R streams. In this case, the initial pilot signal may be considered as a restored pilot signal *U q* by first performing sorting based on absolute values to obtain a permutation matrix *Tₚₑᵣₘ* and then obtaining a flip matrix *T_{flip}* according to positivity or negativity of elements, that is, *T_{flip}TₚₑᵣₘUq=p*. In this way, the ambiguity problem existing in the blind detection method can be eliminated. Therefore, this application focuses on a design of a pilot signal eliminating ambiguity.

For example, the pilot signal is a DMRS. A mapping pattern from the DMRS to a physical resource (namely, the transmission resource of the DMRS) may use a comb structure, or may use a non-comb structure. The following describes DMRSs in different cases in detail.

**Case 1:** The transmission resource of the DMRS is of a comb structure (that is, the mapping pattern from the DMRS to the physical resource uses a comb structure).

In a specific implementation, when the transmission resource of the DMRS is of a comb structure, two adjacent combs in the transmission resource have a same frequency domain spacing. The first DMRS port is used as an example. The first DMRS port occupies one time-frequency resource, which is shared by R DMRSs of one terminal device (for example, a first terminal device). In this case, the DMRS needs to satisfy the following formula (5): ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{t} \left(l′\right) r \left(4n+k′\right)$ where
*q*(*s*) represents a real pilot sequence or a complex pilot sequence, *R* represents a quantity of streams transmitted on the first DMRS port, Z(*R*) represents a normalization coefficient, *s* represents an *s* th DMRS, *w_{f}* (*k'*) represents a frequency-domain spreading sequence of the first DMRS port, *wₜ*(*l'*) represents a time-domain spreading sequence of the first DMRS port, and *r* (4*n* + *k'*) represents a frequency-domain sequence of the transmission resource.

The R DMRSs may be determined based on a DMRS design in the foregoing formula (5). One terminal device is used as an example. The network device needs to send configuration information to the terminal device. The configuration information needs to indicate a transmission resource of a DMRS, and further needs to indicate a quantity R of streams transmitted on the first DMRS port. In this way, the network device can send the R DMRSs to the terminal device on the transmission resource through the first DMRS port, and the terminal device can receive the R DMRSs on the corresponding transmission resource through the first DMRS port. This implements sharing of one DMRS port by a plurality of streams of one terminal device, and can support data transmission with a larger quantity of spatial streams.

R is an integer greater than or equal to 1, and the first DMRS port is a DMRS port corresponding to the transmission resource. It may be understood that the first DMRS port is any DMRS port corresponding to the transmission resource, that is, the quantity of streams transmitted on each DMRS port indicated by the configuration information is R. For example, the configuration information indicates that a quantity of streams transmitted on each DMRS port is 4.

It may alternatively be understood that the first DMRS port is a specific DMRS port corresponding to the transmission resource, that is, a quantity of streams transmitted on the specific DMRS port indicated by the configuration information is R. In this way, quantities of streams transmitted on DMRS ports corresponding to the transmission resource can be the same or can be different, thereby helping improve flexibility of configuring a quantity of transmission streams. For example, the configuration information indicates that a quantity of streams transmitted on a DMRS port 1 is 4. For another example, a quantity of streams transmitted on a DMRS port 2 is 2.

In a possible implementation, the transmission resource includes a plurality of combs, and code division multiplexing may or may not be performed on the R DMRSs on each comb. The following separately describes the two manners.

Manner 1: Code division multiplexing is not performed for the R DMRSs on each comb.

In other words, when the network device sends the R DMRSs to the terminal device on the transmission resource through the first DMRS port, a specific implementation may be as follows: The network device sends the R DMRSs to the terminal device on each comb in the transmission resource through the first DMRS port.

Correspondingly, when the terminal device receives the R DMRSs from the network device on the transmission resource through the first DMRS port, a specific implementation may be as follows: The terminal device receives the R DMRSs from the network device on each comb in the transmission resource through the first DMRS port.

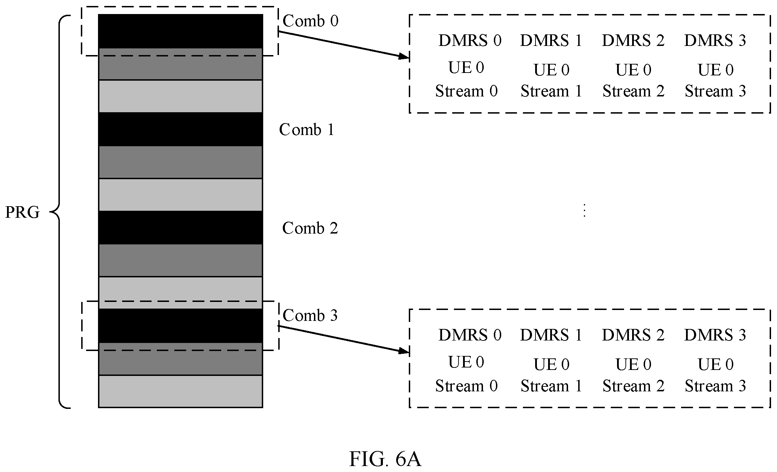

As shown in FIG. 6A, the transmission resource of the DMRS uses a comb structure. The first DMRS port is used as an example. It is assumed that a quantity R of streams transmitted on the first DMRS port is 4, and a transmission resource corresponding to the first DMRS port has four combs (namely, a comb 0, a comb 1, a comb 2, and a comb 3). The network device may send four DMRSs (namely, a DMRS 0, a DMRS 1, a DMRS 2, and a DMRS 3) to a terminal device 0 on each of the four combs. Correspondingly, the terminal device 0 may receive the four DMRSs from the network device on each comb.

Optionally, for one terminal device, R DMRSs corresponding to the terminal device are different, and a sum of powers of the R DMRSs corresponding to the terminal device is 1. It may be understood that R DMRSs of one terminal device occupy a same time domain resource. To distinguish between different transmission streams, it needs to be ensured that the R DMRSs are different. In addition, to avoid increasing additional pilot overheads, pilot signals originally on a same time domain resource are split into a plurality of pilot signals for use. Therefore, it needs to be ensured that a sum of powers of the R DMRSs corresponding to the terminal device is 1. An experiment shows that a maximum of 75% DMRS overheads can be reduced while data transmission with a larger quantity of spatial streams is supported.

Manner 2: Code division multiplexing is performed for the R DMRSs on each comb.

In other words, when the network device sends the R DMRSs to the terminal device on the transmission resource through the first DMRS port, a specific implementation may be as follows: The network device sends the R DMRSs to the terminal device on each comb in the transmission resource through the first DMRS port.

Correspondingly, when the terminal device receives the R DMRSs from the network device on the transmission resource through the first DMRS port, a specific implementation may be as follows: The terminal device receives the R DMRSs from the network device on each comb in the transmission resource through the first DMRS port.

Each comb includes a plurality of code domain resources, and the R DMRSs occupy one of the plurality of code domain resources.

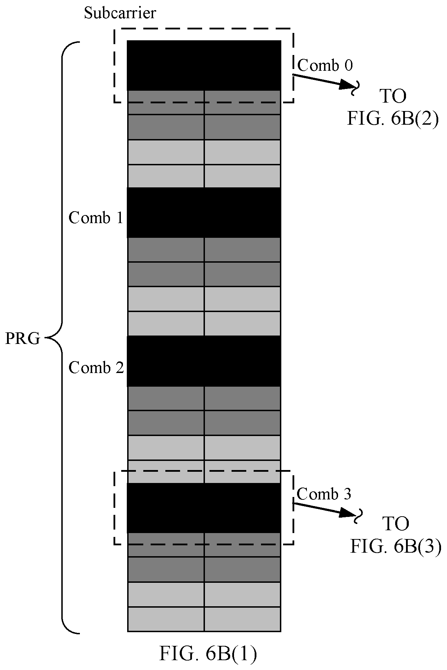

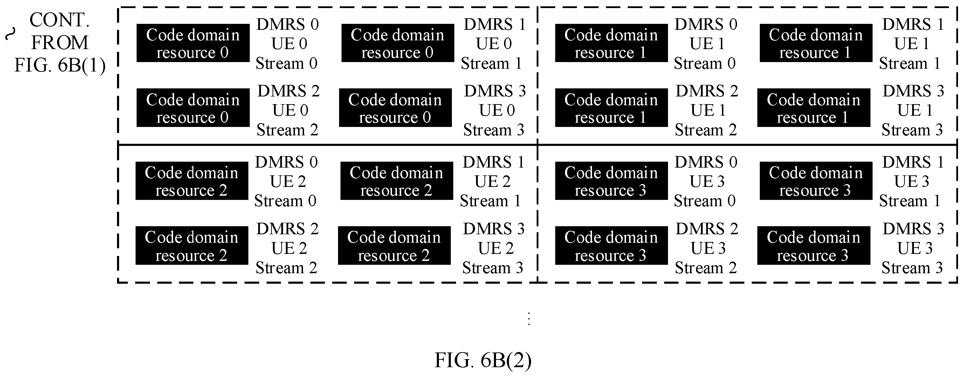

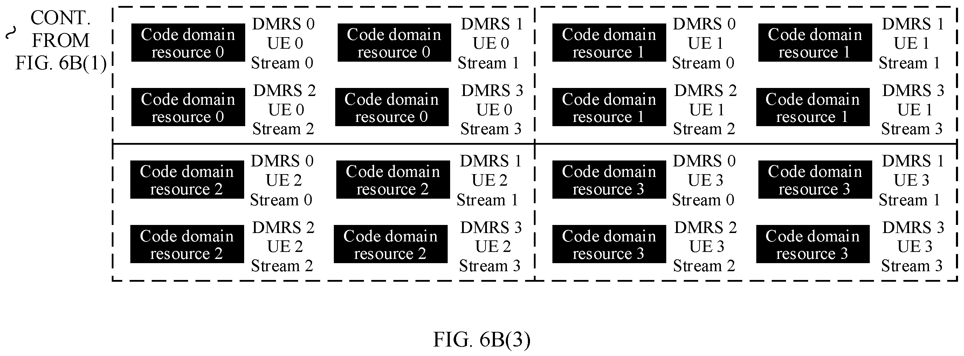

As shown in FIG. 6B(1) to FIG. 6B(3), the transmission resource of the DMRS uses a comb structure. The first DMRS port is used as an example. It is assumed that a quantity R of streams transmitted on the first DMRS port is 4, and a transmission resource corresponding to the first DMRS port has four combs (namely, a comb 0, a comb 1, a comb 2, and a comb 3). Each comb has four code domain resources (namely, a code domain resource 0, a code domain resource 1, a code domain resource 2, and a code domain resource 3).

The network device may send four DMRSs (namely, a DMRS 0, a DMRS 1, a DMRS 2, and a DMRS 3) to a terminal device 0 on the code domain resource 0 in each comb. Correspondingly, the terminal device 0 may receive the four DMRSs from the network device on the code domain resource 0 in each comb.

The network device may alternatively send four DMRSs (namely, a DMRS 0, a DMRS 1, a DMRS 2, and a DMRS 3) to a terminal device 1 on the code domain resource 1 in each comb. Correspondingly, the terminal device 1 may receive the four DMRSs from the network device on the code domain resource 1 in each comb.

The network device may alternatively send four DMRSs (namely, a DMRS 0, a DMRS 1, a DMRS 2, and a DMRS 3) to a terminal device 2 on the code domain resource 2 in each comb. Correspondingly, the terminal device 2 may receive the four DMRSs from the network device on the code domain resource 2 in each comb.

The network device may send four DMRSs (namely, a DMRS 0, a DMRS 1, a DMRS 2, and a DMRS 3) to a terminal device 3 on the code domain resource 3 in each comb. Correspondingly, the terminal device 3 may receive the four DMRSs from the network device on the code domain resource 3 in each comb.

In conclusion, R DMRSs of one terminal device occupy one same time domain resource and one same code domain resource in each comb.

Optionally, for one terminal device, R DMRSs corresponding to the terminal device are different, and a sum of powers of the R DMRSs corresponding to the terminal device is 1. It may be understood that R DMRSs of one terminal device occupy a same time domain resource. To distinguish between different transmission streams, it needs to be ensured that the R DMRSs are different. In addition, to avoid increasing additional pilot overheads, pilot signals originally on a same time domain resource are split into a plurality of pilot signals for use. Therefore, it needs to be ensured that a sum of powers of the R DMRSs corresponding to the terminal device is 1. An experiment shows that a maximum of 75% DMRS overheads can be reduced while data transmission with a larger quantity of spatial streams is supported.

**Case 2:** The transmission resource of the DMRS is of a non-comb structure (that is, the mapping pattern from the DMRS to the physical resource uses a non-comb structure).

In a specific implementation, when the transmission resource of the DMRS is of a non-comb structure, the first DMRS port is used as an example, and the first DMRS port occupies one time-frequency resource, which is shared by R DMRSs of one terminal device (for example, a first terminal device). In this case, the DMRS needs to satisfy the following formula (6): ${{a}^{˜}}_{k , l}^{\left({p}_{j}\left|s, μ\right.\right)} = \frac{1}{\sqrt{Z \left(R\right)}} q \left(s\right)$ where
*q*(*s*) represents a real pilot sequence or a complex pilot sequence, *R* represents a quantity of streams transmitted on the first DMRS port, Z(*R*) represents a normalization coefficient, and *s* represents an *s*th DMRS.

In addition, for the non-comb structure, a pilot pattern for sending the DMRS needs to be redefined, that is, in the formula (6): $s = 0 , 1 , … , R - 1$$k = 12 {N}_{RB}^{blind} n + Δ$$l = \overline{l} + l '$$n = 0 , 1 , …$$j = 0 , 1 , … , v - 1$

Herein, *k* represents a frequency domain location (namely, a subcarrier index) for sending a DMRS; *l* represents a time domain location (namely, an OFDM symbol index) for sending the DMRS; *l̅* represents a symbol index of a start OFDM symbol occupied by a DMRS modulation symbol or a symbol index of a reference OFDM symbol; and *j* is a port number, *v* represents a total quantity of ports, and ${N}_{RB}^{blind}$ represents a blind estimation unit (for example, a PRG).

It is assumed that a DMRS port is defined as *pⱼ* =0,1,2,3,..., and the following separately describes a single-symbol DMRS and a double-symbol DMRS.
(1) For a configuration type 1 (namely, the single-symbol DMRS): $Δ = {p}_{j} mod 12 {N}_{RB}^{blind}$$l ' = 0$

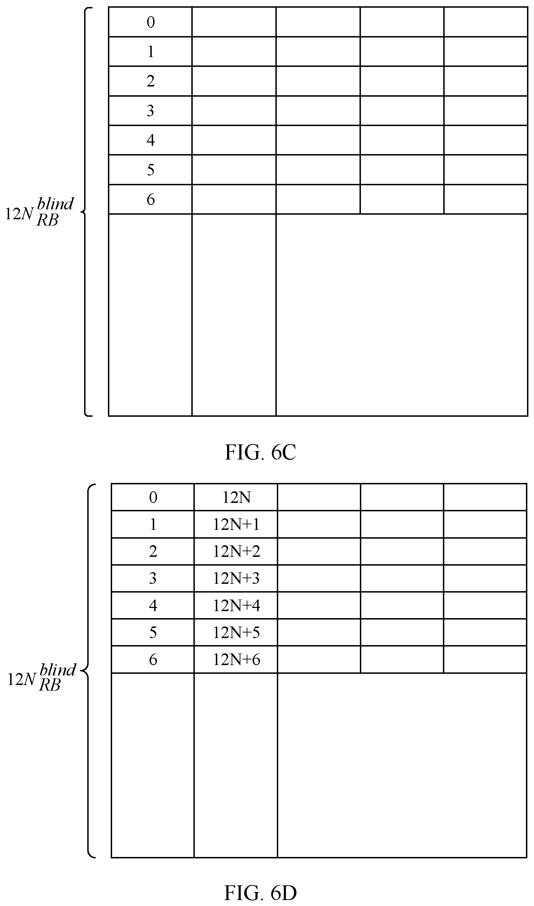

A maximum of $12 {N}_{RB}^{blind}$ ports are supported, and there are a total of $12 {N}_{RB}^{blind}$ R streams. A specific DMRS pilot pattern is shown in FIG. 6C.

(2) For a configuration type 2 (namely, the double-symbol DMRS): $Δ = {p}_{j} mod 12 {N}_{RB}^{blind}$ $l ′ = \left⌊\frac{{p}_{j}}{12 {N}_{RB}^{blind}}\right⌋$

A maximum of $24 {N}_{RB}^{blind}$ are supported, and there are a total of $24 {N}_{RB}^{blind}$ R streams. A specific DMRS pilot pattern is shown in FIG. 6D.

The R DMRSs may be determined based on a DMRS design in the foregoing formula (6). One terminal device is used as an example. The network device needs to send configuration information to the terminal device. The configuration information needs to indicate a transmission resource of a DMRS, and further needs to indicate a quantity R of streams transmitted on the first DMRS port. In this way, the network device can send the R DMRSs to the terminal device on the transmission resource through the first DMRS port, and the terminal device can receive the R DMRSs on the corresponding transmission resource through the first DMRS port. This implements sharing of one DMRS port by a plurality of streams of one terminal device, and can support data transmission with a larger quantity of spatial streams.

R is an integer greater than or equal to 1, and the first DMRS port is a DMRS port corresponding to the transmission resource. It may be understood that the first DMRS port is any DMRS port corresponding to the transmission resource, that is, a quantity of streams transmitted on each DMRS port indicated by the configuration information is R. It may alternatively be understood that the first DMRS port is a specific DMRS port corresponding to the transmission resource, that is, a quantity of streams transmitted on the specific DMRS port indicated by the configuration information is R. In this way, quantities of streams transmitted on DMRS ports corresponding to the transmission resource can be the same or can be different, thereby helping improve flexibility of configuring a quantity of transmission streams.

In a possible implementation, code division multiplexing may be or may not be performed for the R DMRSs on the transmission resource. The following separately describes the two manners.

Manner a: Code division multiplexing is not performed on the transmission resource.

That is, the network device sends the R DMRSs to the terminal device on the transmission resource through the first DMRS port.

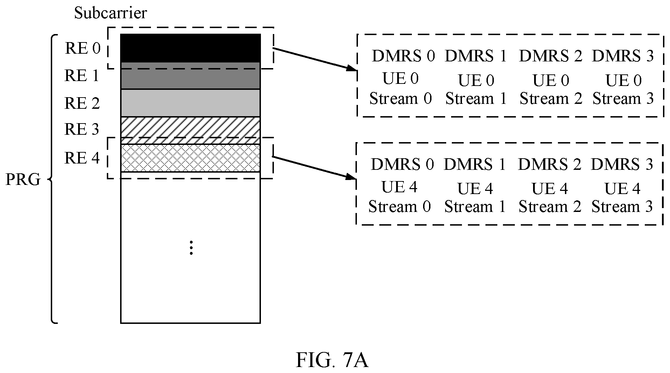

As shown in FIG. 7A, the transmission resource of the DMRS uses a non-comb structure. The first DMRS port is used as an example. It is assumed that a quantity R of streams transmitted on the first DMRS port is 4, and a transmission resource corresponding to the first DMRS port is an RE resource in the blind estimation unit (for example, the PRG). The network device may send four DMRSs (namely, a DMRS 0, a DMRS 1, a DMRS 2, and a DMRS 3) to the terminal device 0 on an RE 0. Correspondingly, the terminal device 0 may receive the four DMRSs from the network device on the transmission resource. The network device may send four DMRSs (namely, a DMRS 0, a DMRS 1, a DMRS 2, and a DMRS 3) to the terminal device 4 on an RE 4. Correspondingly, the terminal device 4 may receive the four DMRSs from the network device on the transmission resource.

Manner b: Code division multiplexing is performed on the transmission resource.

That is, the transmission resource includes a plurality of code domain resources, and the R DMRSs occupy one of the plurality of code domain resources.

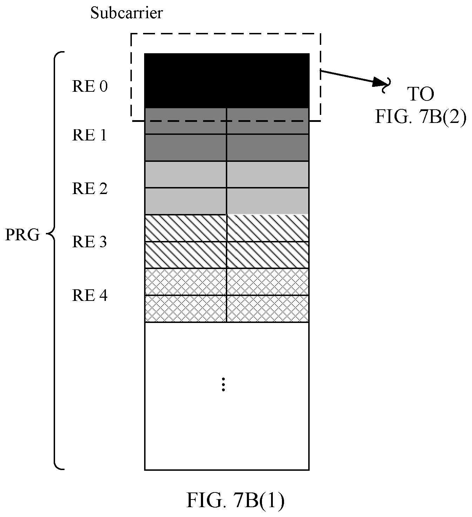

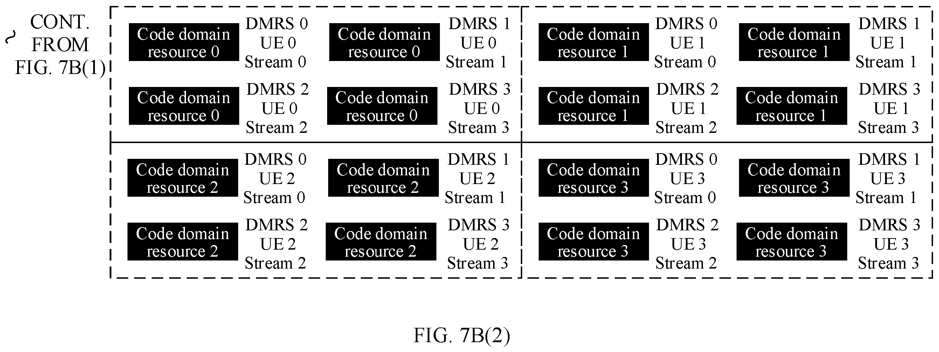

As shown in FIG. 7B(1) and FIG. 7B(2), the transmission resource of the DMRS uses a non-comb structure. The first DMRS port is used as an example. It is assumed that a quantity R of streams transmitted on the first DMRS port is 4, and a transmission resource corresponding to the first DMRS port is an RE resource in the blind estimation unit (for example, the PRG). The transmission resource has four code domain resources (namely, a code domain resource 0, a code domain resource 1, a code domain resource 2, and a code domain resource 3).

The network device may send four DMRSs to the terminal device 0 on a code domain resource 0 in an RE 0. Correspondingly, the terminal device 0 may receive the four DMRSs from the network device on the code domain resource 0 in the transmission resource.

The network device may alternatively send four DMRSs to the terminal device 1 on a code domain resource 1 in the RE 0. Correspondingly, the terminal device 1 may receive the four DMRSs from the network device on the code domain resource 1 in the transmission resource.

The network device may alternatively send four DMRSs to the terminal device 2 on a code domain resource 2 in the RE 0. Correspondingly, the terminal device 2 may receive the four DMRSs from the network device on the code domain resource 2 in the transmission resource.

The network device may send four DMRSs to the terminal device 3 on a code domain resource 3 in the RE 0. Correspondingly, the terminal device 3 may receive the four DMRSs from the network device on the code domain resource 3 in the transmission resource.

In conclusion, R DMRSs of each terminal device occupy one code domain resource in the transmission resource.

In a possible implementation, a DMRS may be a real-number sequence or a complex-number sequence. The following specifically describes the two cases.

Case 1: The DMRS is the real-number sequence.

In a specific implementation, when the DMRS is the real-number sequence, *q*(*s*) is a real pilot sequence, *q* (*s*) = 2*R* - 2*s* - 1, and *R* and *Z*(*R*) have a first association relationship.

Optionally, the first association relationship may be represented by using a first mapping table, and the first mapping table includes the following Table 1:

**Table 1**

| *R* | *Z* (*R*) |
|---|---|
| 1 | 1 |
| 2 | 10 |
| 3 | 35 |
| 4 | 84 |
| 5 | 165 |
| 6 | 286 |
| 7 | 455 |
| 8 | 680 |

Certainly, the first mapping relationship may alternatively be represented in another manner. This is not limited herein.

Case 2: The DMRS is the complex-number sequence.

In a specific implementation, when the DMRS is the complex-number sequence, *q(s),* R , and *Z*(*R*) have a second association relationship.

Optionally, the second association relationship may be represented by using a second mapping table, and the second mapping table includes the following Table 2:

**Table 2**

| *R* | *Z(R)* | *q* (1) | *q*(2) | *q*(3) | *q(4)* | *q(5)* | *q(6)* | *q(7)* | *q(8)* | *α* |
|---|---|---|---|---|---|---|---|---|---|---|
| 1 | 1 | 1 | | | | | | | | - |
| 2 | 2 | ${e}^{\frac{πi}{4}}$ | ${e}^{\frac{3 πi}{4}}$ | | | | | | | - |
| 3 | 3 | ${e}^{\frac{πi}{6}}$ | ${e}^{\frac{3 πi}{6}}$ | ${e}^{\frac{5 πi}{6}}$ | | | | | | - |
| 4 | 4 | ${e}^{\frac{πi}{8}}$ | ${e}^{\frac{3 πi}{8}}$ | ${e}^{\frac{5 πi}{8}}$ | ${e}^{\frac{7 πi}{8}}$ | | | | | - |
| 5 | *4 + α²* | ${e}^{\frac{πi}{8}}$ | ${e}^{\frac{3 πi}{8}}$ | ${e}^{\frac{5 πi}{8}}$ | ${e}^{\frac{7 πi}{8}}$ | *αi* | | | | $\frac{\sqrt{14 + \sqrt{2}} - \sqrt{2 + \sqrt{2}}}{6}$ |
| 6 | 4 +*2α²* | ${e}^{\frac{πi}{8}}$ | ${e}^{\frac{3 πi}{8}}$ | ${e}^{\frac{5 πi}{8}}$ | ${e}^{\frac{7 πi}{8}}$ | ${αe}^{\frac{πi}{4}}$ | ${αe}^{\frac{3 πi}{4}}$ | | | $\frac{\sqrt{6 + \sqrt{2}} - \sqrt{2 + \sqrt{2}}}{2}$ |
| 7 | 5 + 2*α*² | ${e}^{\frac{πi}{10}}$ | ${e}^{\frac{3 πi}{10}}$ | ${e}^{\frac{5 πi}{10}}$ | ${e}^{\frac{7 πi}{10}}$ | ${e}^{\frac{9 πi}{10}}$ | ${αe}^{\frac{πi}{5}}$ | ${αe}^{\frac{4 πi}{5}}$ | | $\frac{\sqrt{2} \left(3+\sqrt{5}\right) \left(\sqrt{17 + 3 \sqrt{5}}-\sqrt{5 + \sqrt{5}}\right)}{8}$ |
| 8 | 6 +2α² | ${e}^{\frac{πi}{12}}$ | ${e}^{\frac{3 πi}{12}}$ | ${e}^{\frac{5 πi}{12}}$ | ${e}^{\frac{7 πi}{12}}$ | ${e}^{\frac{9 πi}{12}}$ | ${e}^{\frac{11 πi}{12}}$ | ${αe}^{\frac{πi}{4}}$ | ${αe}^{\frac{3 πi}{4}}$ | $\frac{1}{3}$ |

Certainly, the second mapping relationship may alternatively be represented in another manner. This is not limited herein.

It may be learned that, based on the foregoing described method, the network device sends the R DMRSs to the terminal device on the transmission resource of the DMRS through the first DMRS port. Correspondingly, the terminal device can receive the R DMRSs from the network device on the transmission resource through the first DMRS port. It may be understood that a plurality of streams of one terminal device share one DMRS port, and each DMRS port corresponds to a scalar sequence whose length is a quantity of streams, to distinguish between different transmission streams, so that data transmission with a larger quantity of spatial streams can be supported. In addition, a data transmission capacity is increased without increasing additional DMRS overheads.

### 2. Uplink transmission

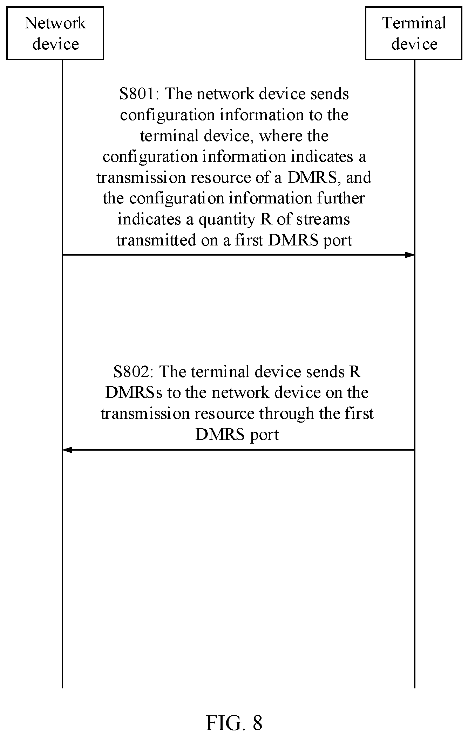

FIG. 8 is a schematic flowchart of another communication method according to an embodiment of this application. As shown in FIG. 8, the communication method includes the following steps S801 and S802. For a terminal device, the method shown in FIG. 8 may be performed by the terminal device and a network device. Alternatively, the method shown in FIG. 8 may be performed by a chip in the terminal device and a chip in the network device. This is not limited in this embodiment of this application. In FIG. 8, an example in which the method is performed by the terminal device and the network device is used for description. It should be noted that in this embodiment of this application, an example in which a pilot signal is a DMRS is used for description.

S801: The network device sends configuration information to the terminal device, where the configuration information indicates a transmission resource of a DMRS, and the configuration information further indicates a quantity R of streams transmitted on a first DMRS port. Correspondingly, the terminal device receives the configuration information from the network device.

In this embodiment of this application, R is an integer greater than or equal to 1, and the first DMRS port is a DMRS port corresponding to the transmission resource.

S802: The terminal device sends R DMRSs to the network device on the transmission resource through the first DMRS port. Correspondingly, the network device receives the R DMRSs from the terminal device.

For example, there is one terminal device. A main difference between the method described in FIG. 4 and the method described in FIG. 8 lies in that execution bodies for sending the R DMRSs are different. In FIG. 4, the network device sends the R DMRSs to the terminal device on the transmission resource through the first DMRS port. In FIG. 8, the terminal device sends the R DMRSs to the network device on the transmission resource through the first DMRS port. For specific implementations of steps S801 and S802, refer to the specific implementations of steps S401 and S402. Details are not described herein again.

It may be learned that, based on the foregoing described method, the terminal device sends the R DMRSs to the network device on the transmission resource of the DMRS through the first DMRS port. Correspondingly, the network device can receive the R DMRSs from the terminal device on the transmission resource through the first DMRS port. It may be understood that a plurality of streams of one terminal device share one DMRS, and each DMRS port corresponds to a scalar sequence whose length is a quantity of streams, to distinguish between different transmission streams, so that data transmission with a larger quantity of spatial streams can be supported. In addition, a data transmission capacity is increased without increasing additional DMRS overheads.

### II. A plurality of streams of a plurality of terminal devices occupy a same time-frequency resource.

### 1. Downlink transmission

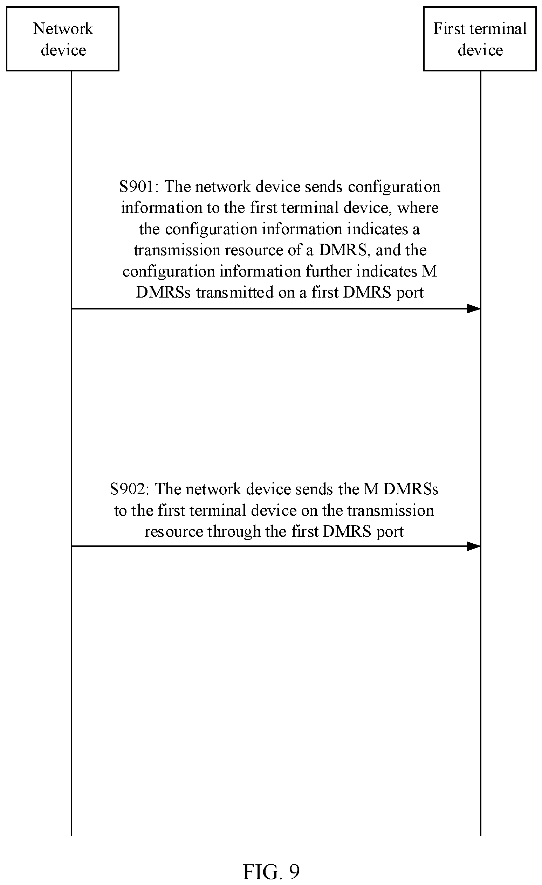

FIG. 9 is a schematic flowchart of a communication method according to an embodiment of this application. As shown in FIG. 9, the communication method includes the following steps S901 and S902. For a plurality of terminal devices, the method shown in FIG. 9 may be performed by a first terminal device and a network device. Alternatively, the method shown in FIG. 9 may be performed by a chip in the first terminal device and a chip in the network device. This is not limited in this embodiment of this application. In FIG. 9, an example in which the method is performed by the first terminal device and the network device is used for description. It should be noted that the first terminal device is one of the plurality of terminal devices. In this embodiment of this application, an example in which a pilot signal is a DMRS is used for description.

S901: The network device sends configuration information to the first terminal device, where the configuration information indicates a transmission resource of a DMRS, and the configuration information further indicates M DMRSs transmitted on a first DMRS port. Correspondingly, the first terminal device receives the configuration information from the network device.

S902: The network device sends the M DMRSs to the first terminal device on the transmission resource through the first DMRS port. Correspondingly, the first terminal device receives the M DMRSs from the network device.

In this embodiment of this application, similar to the method described in FIG. 4, this application also focuses on a design of a pilot signal eliminating ambiguity. For example, the pilot signal is a DMRS. A mapping pattern from the DMRS to a physical resource (namely, the transmission resource of the DMRS) may use a comb structure, or may use a non-comb structure. The following describes DMRSs in different cases in detail.

**Case 1:** The transmission resource of the DMRS is of a comb structure (that is, the mapping pattern from the DMRS to the physical resource uses the comb structure).

In a specific implementation, when the transmission resource of the DMRS is of a comb structure, two adjacent combs in the transmission resource have a same frequency domain spacing. The first DMRS port is used as an example. The first DMRS port occupies one time-frequency resource, which is shared by R DMRSs corresponding to the plurality of terminal devices (for example, the first terminal device and a second terminal device). In this case, the DMRS needs to satisfy the foregoing formula (5).

The R DMRSs may be determined based on a DMRS design in the foregoing formula (5). For the first terminal device in the plurality of terminal devices, the network device needs to send configuration information to the first terminal device. The configuration information needs to indicate a transmission resource of a DMRS, and further needs to indicate M DMRSs transmitted on the first DMRS port. The M DMRSs are M DMRSs in the R DMRSs, where M is less than R. In this way, the network device can send the M DMRSs to the first terminal device on the transmission resource through the first DMRS port, and the first terminal device can receive the M DMRSs on the corresponding transmission resource through the first DMRS port.

It may be understood that a main difference between the method described in FIG. 9 and the method described in FIG. 4 lies in that: In the method described in FIG. 4, the configuration information indicates the quantity R of streams transmitted on the first DMRS port, while in the method described in FIG. 9, the configuration information directly indicates the M DMRSs transmitted by the first terminal device on the first DMRS port, that is, directly indicates M DMRS sequences. In other words, the network device directly indicates the M DMRSs that need to be received by the first terminal device. In this way, when the network device sends the M DMRSs, the first terminal device can receive the M DMRSs.

Certainly, the network device may further send the configuration information to another terminal device. For example, the network device may send the configuration information to the second terminal device. A total quantity of DMRSs corresponding to all terminal devices is R. In this manner, sharing of one DMRS port by the plurality of streams of the plurality of terminal devices can be implemented, and data transmission with a larger quantity of spatial streams can be supported.

For example, the network device indicates, to a terminal device 0, two DMRSs (namely, a DMRS 0 and a DMRS 1) transmitted on the first DMRS port. After the network device sends the two DMRSs (namely, the DMRS 0 and the DMRS 1) to the terminal device 0, the terminal device 0 may receive the two DMRSs (namely, the DMRS 0 and the DMRS 1) from the network device through the first DMRS port.

For another example, the network device indicates, to a terminal device 1, two DMRSs (namely, a DMRS 2 and a DMRS 3) transmitted on the first DMRS port. After the network device sends the two DMRSs (namely, the DMRS 2 and the DMRS 3) to the terminal device 1, the terminal device 1 may receive the two DMRSs (namely, the DMRS 2 and the DMRS 3) from the network device through the first DMRS port.

R is an integer greater than or equal to 1, M is an integer greater than or equal to 1, and M is less than R. The first DMRS port is a DMRS port corresponding to the transmission resource. It may be understood that the first DMRS port is any DMRS port corresponding to the transmission resource, that is, the configuration information indicates M DMRSs transmitted on each DMRS port. For example, the configuration information indicates two DMRSs transmitted on each DMRS port.

It may alternatively be understood that the first DMRS port is a specific DMRS port corresponding to the transmission resource, that is, the configuration information indicates M DMRSs transmitted on the specific DMRS port. In this way, quantities of DMRSs transmitted on different DMRS ports corresponding to the transmission resource may be the same or may be different, thereby helping improve flexibility of configuring a quantity of transmission streams. For example, the configuration information indicates two DMRSs transmitted on a DMRS port 1. For another example, the configuration information indicates four DMRSs transmitted on a DMRS port 2.

It should be noted that quantities of DMRSs transmitted by different terminal devices in the plurality of terminal devices on the first DMRS port may be the same or different, that is, quantities of DMRSs corresponding to the different terminal devices may be the same or different.

For example, the network device indicates, to the terminal device 0, two DMRSs (namely, a DMRS 0 and a DMRS 1) transmitted on the first DMRS port. After the network device sends the two DMRSs (namely, the DMRS 0 and the DMRS 1) to the terminal device 0, the terminal device 0 may receive the two DMRSs (namely, the DMRS 0 and the DMRS 1) from the network device through the first DMRS port. The network device indicates, to the terminal device 1, three DMRSs (namely, a DMRS 2, a DMRS 3, and a DMRS 4) transmitted on the first DMRS port. After the network device sends the three DMRSs (namely, the DMRS 2, the DMRS 3, and the DMRS 4) to the terminal device 1, the terminal device 1 may receive the three DMRSs (namely, the DMRS 2, the DMRS 3, and the DMRS 4) from the network device through the first DMRS port.

In a possible implementation, the transmission resource includes a plurality of combs, and code division multiplexing may or may not be performed on M DMRSs of one terminal device on each comb. The following separately describes the two manners.

Manner 1: Code division multiplexing is not performed for the M DMRSs on each comb.

In other words, when the network device sends the M DMRSs to the first terminal device on the transmission resource through the first DMRS port, a specific implementation may be as follows: The network device sends the M DMRSs to the first terminal device on each comb in the transmission resource through the first DMRS port.

Correspondingly, when the first terminal device receives the M DMRSs from the network device on the transmission resource, through the first DMRS port, a specific implementation may be as follows: The first terminal device receives the M DMRSs from the network device on each comb in the transmission resource through the first DMRS port.

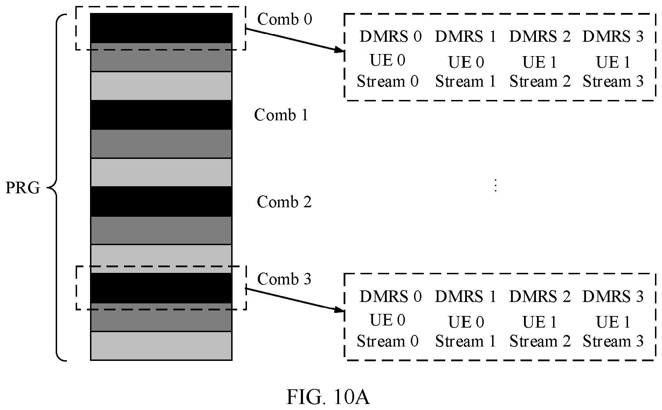

As shown in FIG. 10A, the transmission resource of the DMRS uses a comb structure. The first DMRS port is used as an example, and a total quantity of DMRSs corresponding to two terminal devices (the terminal device 0 and the terminal device 1) is 4. It is assumed that the first terminal device is the terminal device 0, the terminal device 0 transmits two DMRSs on the first DMRS port, and a transmission resource corresponding to the first DMRS port has four combs (namely, a comb 0, a comb 1, a comb 2, and a comb 3). The network device may send two DMRSs (namely, the DMRS 0 and the DMRS 1) to the terminal device 0 on each of the four combs. Correspondingly, the terminal device 0 may receive the two DMRSs (namely, the DMRS 0 and the DMRS 1) from the network device on each comb. Certainly, assuming that the terminal device 1 transmits two DMRSs on the first DMRS port, the network device may send two DMRSs (namely, the DMRS 2 and the DMRS 3) to the terminal device 1 on each of the four combs. Correspondingly, the terminal device 1 may receive the two DMRSs (namely, the DMRS 2 and the DMRS 3) from the network device on each comb.

Optionally, for the plurality of terminal devices, a total quantity of DMRSs corresponding to the plurality of terminal devices is R, the R DMRSs are different, and a sum of powers of the R DMRSs is 1. The M DMRSs corresponding to the first terminal device are different, a sum of powers of the M DMRSs corresponding to the first terminal device is less than 1, the first terminal device is one of the plurality of terminal devices, and M is less than R.

It may be understood that the R DMRSs corresponding to the plurality of terminal devices may share one same DMRS port, and one terminal device may transmit M DMRSs of the R DMRSs on the DMRS port. Because the R DMRSs occupy a same time domain resource, to distinguish between different transmission streams, it needs to be ensured that the R DMRSs are different, that is, the M DMRSs are also different. To avoid increasing additional pilot overheads, pilot signals originally on a same time domain resource are split into a plurality of pilot signals for use. Therefore, it needs to be ensured that a value obtained by adding powers of the R DMRSs corresponding to the plurality of terminal devices is 1, that is, a sum of powers of M DMRSs corresponding to one terminal device is less than 1. An experiment shows that a maximum of 75% DMRS overheads can be reduced while data transmission with a larger quantity of spatial streams is supported.

For example, it is assumed that R is 4, the terminal devices include the first terminal device and the second terminal device, the first terminal device corresponds to two DMRSs, and the second terminal device corresponds to two DMRSs. The two DMRSs corresponding to the first terminal device are different, and the two DMRSs corresponding to the second terminal device are different. A sum of powers of the two DMRSs corresponding to the first terminal device is less than 1, and a sum of powers of the two DMRSs corresponding to the second terminal device is less than 1. The sum of the powers of the two DMRSs corresponding to the first terminal device plus the sum of the powers of the two DMRSs corresponding to the second terminal device equals 1, that is, a sum of powers of the four DMRSs corresponding to the two terminal devices is 1.

For another example, it is assumed that R is 5, the terminal devices include the first terminal device and the second terminal device, the first terminal device corresponds to two DMRSs, and the second terminal device corresponds to three DMRSs. The two DMRSs corresponding to the first terminal device are different, and the three DMRSs corresponding to the second terminal device are different. A sum of powers of the two DMRSs corresponding to the first terminal device is less than 1, and a sum of powers of the three DMRSs corresponding to the second terminal device is less than 1. The sum of the powers of the two DMRSs corresponding to the first terminal device plus the sum of the powers of the three DMRSs corresponding to the second terminal device equals 1, that is, a sum of powers of the five DMRSs corresponding to the two terminal devices is 1.

Manner 2: Code division multiplexing is performed for the M DMRSs on each comb.

In other words, when the network device sends the M DMRSs to the first terminal device on the transmission resource through the first DMRS port, a specific implementation may be as follows: The network device sends the M DMRSs to the first terminal device on each comb in the transmission resource through the first DMRS port.

Correspondingly, when the first terminal device receives the M DMRSs from the network device on the transmission resource, through the first DMRS port, a specific implementation may be as follows: The first terminal device receives the M DMRSs from the network device on each comb in the transmission resource through the first DMRS port.

Each comb includes a plurality of code domain resources, and the M DMRSs occupy one of the plurality of code domain resources.

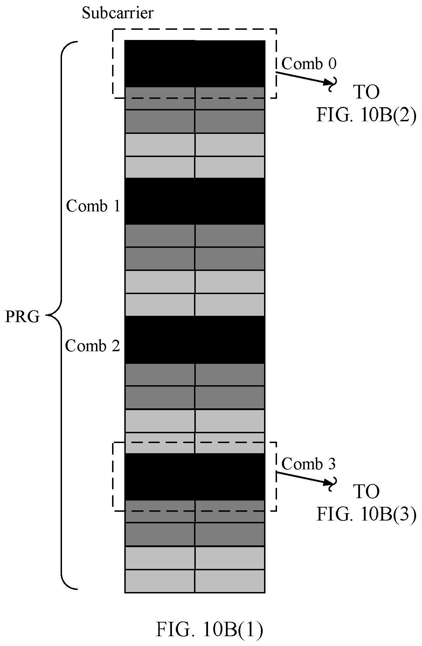

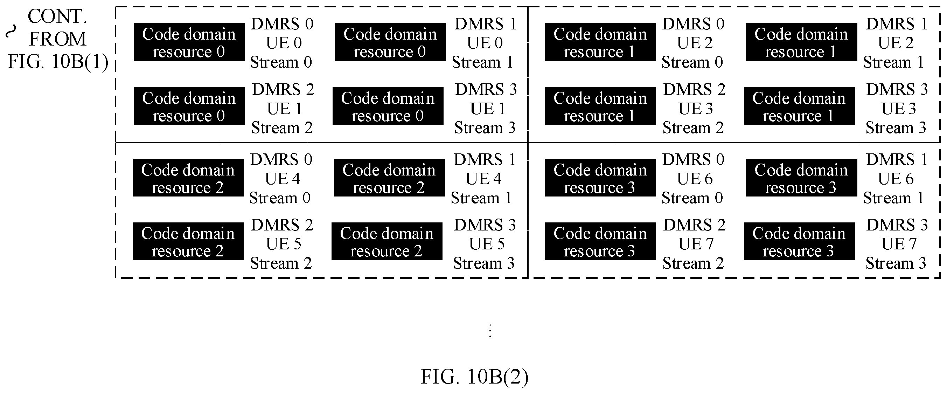

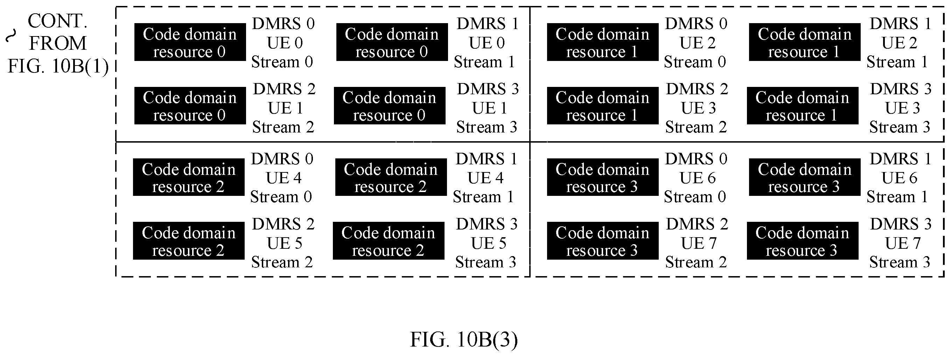

As shown in FIG. 10B(1) to FIG. 10B(3), the transmission resource of the DMRS uses a comb structure. The first DMRS port is used as an example, and a total quantity of DMRSs corresponding to eight terminal devices (a terminal device 0, a terminal device 1, a terminal device 2, a terminal device 3, a terminal device 4, a terminal device 5, a terminal device 6, and a terminal device 7) is 16. It is assumed that the first terminal device is the terminal device 0, the terminal device 0 transmits two DMRSs on the first DMRS port, a transmission resource corresponding to the first DMRS port has four combs (namely, a comb 0, a comb 1, a comb 2, and a comb 3), and each comb has four code domain resources (namely, a code domain resource 0, a code domain resource 1, a code domain resource 2, and a code domain resource 3).

The network device may send two DMRSs (namely, the DMRS 0 and the DMRS 1) to the terminal device 0 on the code domain resource 0 in each comb. Correspondingly, the terminal device 0 may receive the two DMRSs from the network device on the code domain resource 0 in each comb. The network device may alternatively send two DMRSs (namely, the DMRS 2 and the DMRS 3) to the terminal device 1 on the code domain resource 0 in each comb. Correspondingly, the terminal device 1 may receive the two DMRSs from the network device on the code domain resource 0 in each comb.

The network device may alternatively send two DMRSs (namely, the DMRS 0 and the DMRS 1) to the terminal device 2 on the code domain resource 1 in each comb. Correspondingly, the terminal device 2 may receive the two DMRSs from the network device on the code domain resource 1 in each comb. The network device may alternatively send two DMRSs (namely, the DMRS 2 and the DMRS 3) to the terminal device 3 on the code domain resource 1 in each comb. Correspondingly, the terminal device 3 may receive the two DMRSs from the network device on the code domain resource 1 in each comb.

The network device may alternatively send two DMRSs (namely, the DMRS 0 and the DMRS 1) to the terminal device 4 on the code domain resource 2 in each comb. Correspondingly, the terminal device 4 may receive the two DMRSs from the network device on the code domain resource 2 in each comb. The network device may alternatively send two DMRSs (namely, the DMRS 2 and the DMRS 3) to the terminal device 5 on the code domain resource 2 in each comb. Correspondingly, the terminal device 5 may receive the two DMRSs from the network device on the code domain resource 2 in each comb.

The network device may alternatively send two DMRSs (namely, the DMRS 0 and the DMRS 1) to the terminal device 6 on the code domain resource 3 in each comb. Correspondingly, the terminal device 6 may receive the two DMRSs from the network device on the code domain resource 3 in each comb. The network device may alternatively send two DMRSs (namely, the DMRS 2 and the DMRS 3) to the terminal device 7 on the code domain resource 3 in each comb. Correspondingly, the terminal device 7 may receive the two DMRSs from the network device on the code domain resource 3 in each comb.

In conclusion, M DMRSs corresponding to one of the plurality of terminal devices occupy one same time domain resource and one same code domain resource in each comb. Total quantities of DMRSs corresponding to different terminal devices may be the same or different, and a total quantity of DMRSs corresponding to the plurality of terminal devices is R.

Optionally, for the plurality of terminal devices, a total quantity of DMRSs corresponding to the plurality of terminal devices is R, the R DMRSs are different, and a sum of powers of the R DMRSs is 1. The M DMRSs corresponding to the first terminal device are different, a sum of powers of the M DMRSs corresponding to the first terminal device is less than 1, the first terminal device is one of the plurality of terminal devices, and M is less than R.

It may be understood that the R DMRSs corresponding to the plurality of terminal devices may share one same DMRS port, and one terminal device may transmit M DMRSs of the R DMRSs on the DMRS port. Because the R DMRSs occupy a same time domain resource, to distinguish between different transmission streams, it needs to be ensured that the R DMRSs are different, that is, the M DMRSs are also different. To avoid increasing additional pilot overheads, pilot signals originally on a same time domain resource are split into a plurality of pilot signals for use. Therefore, it needs to be ensured that a value obtained by adding a sum of powers of the R DMRSs corresponding to the plurality of terminal devices is 1, that is, a sum of powers of M DMRSs corresponding to one terminal device is less than 1. An experiment shows that a maximum of 75% DMRS overheads can be reduced while data transmission with a larger quantity of spatial streams is supported.

For example, it is assumed that R is 4, the terminal devices include the first terminal device and the second terminal device, the first terminal device corresponds to two DMRSs, and the second terminal device corresponds to two DMRSs. The two DMRSs corresponding to the first terminal device are different, and the two DMRSs corresponding to the second terminal device are different. A sum of powers of the two DMRSs corresponding to the first terminal device is less than 1, and a sum of powers of the two DMRSs corresponding to the second terminal device is less than 1. The sum of the powers of the two DMRSs corresponding to the first terminal device plus the sum of the powers of the two DMRSs corresponding to the second terminal device equals 1, that is, a sum of powers of the four DMRSs corresponding to the two terminal devices is 1.

For another example, it is assumed that R is 5, the terminal devices include the first terminal device and the second terminal device, the first terminal device corresponds to two DMRSs, and the second terminal device corresponds to three DMRSs. The two DMRSs corresponding to the first terminal device are different, and the three DMRSs corresponding to the second terminal device are different. A sum of powers of the two DMRSs corresponding to the first terminal device is less than 1, and a sum of powers of the three DMRSs corresponding to the second terminal device is less than 1. The sum of the powers of the two DMRSs corresponding to the first terminal device plus the sum of the powers of the three DMRSs corresponding to the second terminal device equals 1, that is, a sum of powers of the five DMRSs corresponding to the two terminal devices is 1.

**Case 2:** The transmission resource of the DMRS is of a non-comb structure (that is, the mapping pattern from the DMRS to the physical resource uses a non-comb structure).

In a specific implementation, when the transmission resource of the DMRS is of a non-comb structure, the first DMRS port is used as an example, and the first DMRS port occupies one time-frequency resource, which is shared by R DMRSs corresponding to the plurality of terminal devices (for example, the first terminal device and a second terminal device). In this case, the DMRS needs to satisfy the foregoing formula (6).

The R DMRSs may be determined based on a DMRS design in the foregoing formula (6). For the first terminal device in the plurality of terminal devices, the network device needs to send configuration information to the first terminal device. The configuration information needs to indicate a transmission resource of a DMRS, and further needs to indicate M DMRSs transmitted by the first terminal device on the first DMRS port. The M DMRSs are M DMRSs in the R DMRSs, where M is less than R. In this way, the network device can send the M DMRSs to the first terminal device on the transmission resource through the first DMRS port, and the first terminal device can receive the M DMRSs on the corresponding transmission resource through the first DMRS port.

It may be understood that a main difference between the method described in FIG. 9 and the method described in FIG. 4 lies in that: In the method described in FIG. 4, the configuration information indicates the quantity R of streams transmitted on the first DMRS port, while in the method described in FIG. 8, the configuration information directly indicates the M DMRSs transmitted by the first terminal device on the first DMRS port, that is, directly indicates M DMRS sequences. In other words, the network device directly indicates the M DMRSs that need to be received by the first terminal device. In this way, when the network device sends the M DMRSs, the first terminal device can receive the M DMRSs.

Certainly, the network device may further send the configuration information to another terminal device. For example, the network device may send the configuration information to the second terminal device. A total quantity of DMRSs corresponding to all terminal devices is R. In this manner, sharing of one DMRS port by the plurality of streams of the plurality of terminal devices can be implemented, and data transmission with a larger quantity of spatial streams can be supported.

R is an integer greater than or equal to 1, M is an integer greater than or equal to 1, and M is less than R. The first DMRS port is a DMRS port corresponding to the transmission resource. It may be understood that the first DMRS port is any DMRS port corresponding to the transmission resource, that is, the configuration information indicates M DMRSs transmitted on each DMRS port. For example, the configuration information indicates two DMRSs transmitted on each DMRS port.

It may alternatively be understood that the first DMRS port is a specific DMRS port corresponding to the transmission resource, that is, the configuration information indicates M DMRSs transmitted on the specific DMRS port. In this way, quantities of DMRSs transmitted on DMRS ports corresponding to the transmission resource may be the same or may be different, thereby helping improve flexibility of configuring a quantity of transmission streams.

In a possible implementation, code division multiplexing may be or may not be performed for the M DMRSs on the transmission resource. The following separately describes the two manners.

Manner a: Code division multiplexing is not performed for the M DMRSs on the transmission resource.

That is, the network device sends the M DMRSs to the first terminal device on the transmission resource through the first DMRS port. Correspondingly, the first terminal device receives the M DMRSs from the network device on the transmission resource through the first DMRS port.

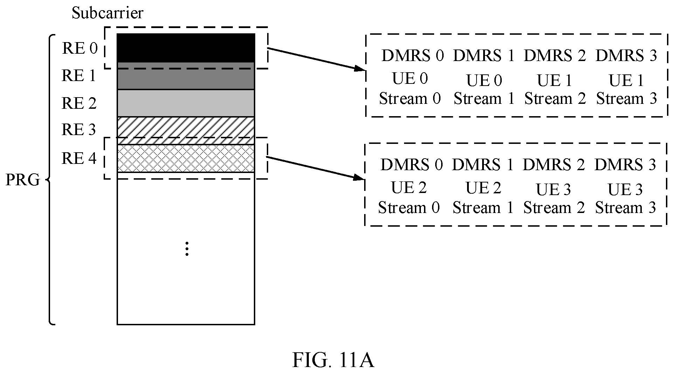

As shown in FIG. 11A, the transmission resource of the DMRS uses a non-comb structure. The first DMRS port is used as an example, and a total quantity of DMRSs corresponding to two terminal devices (a terminal device 0 and a terminal device 1, or a terminal device 2 and a terminal device 3) is 4. It is assumed that the terminal device 0 transmits two DMRSs on the first DMRS port, the terminal device 1 transmits two DMRSs on the first DMRS port, the terminal device 2 transmits two DMRSs on the first DMRS port, and the terminal device 3 transmits two DMRSs on the first DMRS port.

A transmission resource corresponding to the first DMRS port is an RE resource in a blind estimation unit (for example, a PRG). The network device may send two DMRSs (namely, the DMRS 0 and the DMRS 1) to the terminal device 0 on an RE 0, and send two DMRSs (namely, the DMRS 2 and the DMRS 3) to the terminal device 1 on the RE 0. Correspondingly, the terminal device 0 may receive the two DMRSs (namely, the DMRS 0 and the DMRS 1) from the network device on the transmission resource, and the terminal device 1 may receive the two DMRSs (namely, the DMRS 2 and the DMRS 3) from the network device on the transmission resource.

The network device may alternatively send two DMRSs (namely, the DMRS 0 and the DMRS 1) to the terminal device 2 on an RE 4, and send two DMRSs (namely, the DMRS 2 and the DMRS 3) to the terminal device 3 on the RE 4. Correspondingly, the terminal device 2 may receive the two DMRSs (namely, the DMRS 0 and the DMRS 1) from the network device on the transmission resource, and the terminal device 3 may receive the two DMRSs (namely, the DMRS 2 and the DMRS 3) from the network device on the transmission resource.

Manner b: Code division multiplexing is performed for the M DMRSs on the transmission resource.

That is, the transmission resource includes a plurality of code domain resources, and the M DMRSs occupy one of the plurality of code domain resources.

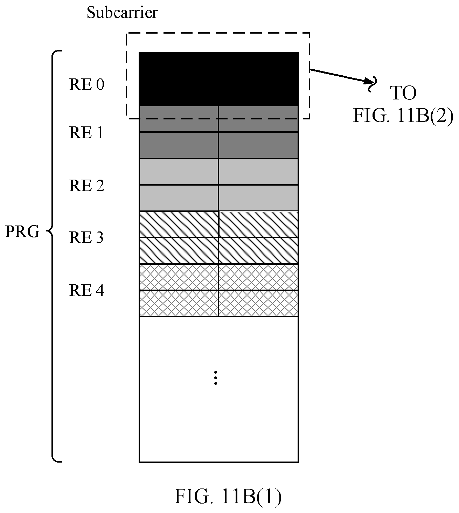

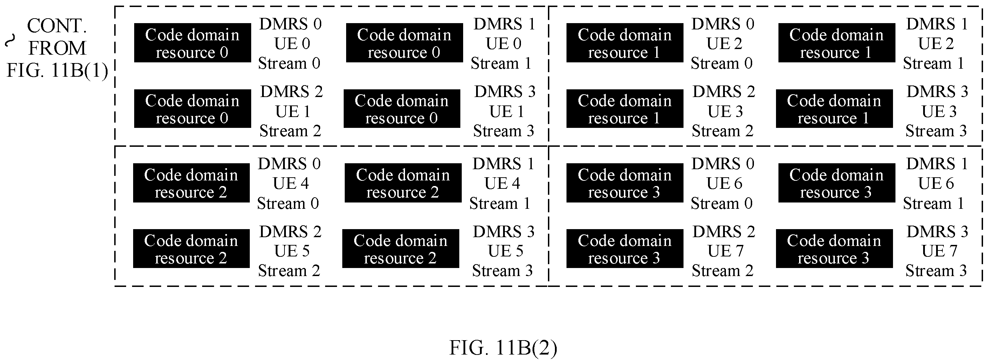

As shown in FIG. 11B(1) and FIG. 11B(2), the transmission resource of the DMRS uses a non-comb structure. The first DMRS port is used as an example, and a total quantity of DMRSs corresponding to four terminal devices (a terminal device 0, a terminal device 1, a terminal device 2, and a terminal device 3) is 16. It is assumed that the terminal device 0 transmits four DMRSs on the first DMRS port, the terminal device 1 transmits four DMRSs on the first DMRS port, the terminal device 2 transmits four DMRSs on the first DMRS port, and the terminal device 3 transmits four DMRSs on the first DMRS port. A transmission resource corresponding to the first DMRS port is an RE resource in the blind estimation unit (for example, the PRG). The transmission resource has four code domain resources (namely, a code domain resource 0, a code domain resource 1, a code domain resource 2, and a code domain resource 3).

The network device may send four DMRSs to the terminal device 0 on a code domain resource 0 in an RE 0. Correspondingly, the terminal device 0 may receive the four DMRSs from the network device on the code domain resource 0 in the transmission resource.

The network device may alternatively send four DMRSs to the terminal device 1 on a code domain resource 1 in the RE 0. Correspondingly, the terminal device 1 may receive the four DMRSs from the network device on the code domain resource 1 in the transmission resource.

The network device may alternatively send four DMRSs to the terminal device 2 on a code domain resource 2 in the RE 0. Correspondingly, the terminal device 2 may receive the four DMRSs from the network device on the code domain resource 2 in the transmission resource.

The network device may send four DMRSs to the terminal device 3 on a code domain resource 3 in the RE 0. Correspondingly, the terminal device 3 may receive the four DMRSs from the network device on the code domain resource 3 in the transmission resource.

In conclusion, M DMRSs of each terminal device occupy one code domain resource in the transmission resource. Total quantities of DMRSs corresponding to different terminal devices may be the same or different, and a total quantity of DMRSs corresponding to the plurality of terminal devices is R.

In a possible implementation, a DMRS may be a real-number sequence or a complex-number sequence. The following specifically describes the two cases.

Case 1: The DMRS is the real-number sequence.

In a specific implementation, when the DMRS is the real-number sequence, *q*(*s*) is a real pilot sequence, *q* (*s*) = 2*R* - 2*s* - 1, and *R* and *Z*(*R*) have a first association relationship.

Optionally, the first association relationship may be represented by using a first mapping table, and the first mapping table includes the foregoing Table 1. Certainly, the first mapping relationship may alternatively be represented in another manner. This is not limited herein.

Case 2: The DMRS is the complex-number sequence.

In a specific implementation, when the DMRS is the complex-number sequence, *q*(*s*), *R* , and *Z*(*R*) have a second association relationship.

Optionally, the second association relationship may be represented by using a second mapping table, and the second mapping table includes the foregoing Table 2. Certainly, the second mapping relationship may alternatively be represented in another manner. This is not limited herein.

It may be learned that, based on the foregoing described method, the network device may send the M DMRSs to the first terminal device on the transmission resource of the DMRS through the first DMRS port. Correspondingly, the first terminal device may receive the M DMRSs from the network device on the transmission resource through the first DMRS port. Similarly, the network device may send the M DMRSs to the second terminal device on the transmission resource of the DMRS through the first DMRS port. Correspondingly, the second terminal device may receive the M DMRSs from the network device on the transmission resource through the first DMRS port. It may be understood that the plurality of streams of the plurality of terminal devices share one DMRS port, and each DMRS port corresponds to a scalar sequence whose length is a quantity of streams, to distinguish between different transmission streams, so that data transmission with a larger quantity of spatial streams can be supported. In addition, a data transmission capacity is increased without increasing additional DMRS overheads.

### 2. Uplink transmission

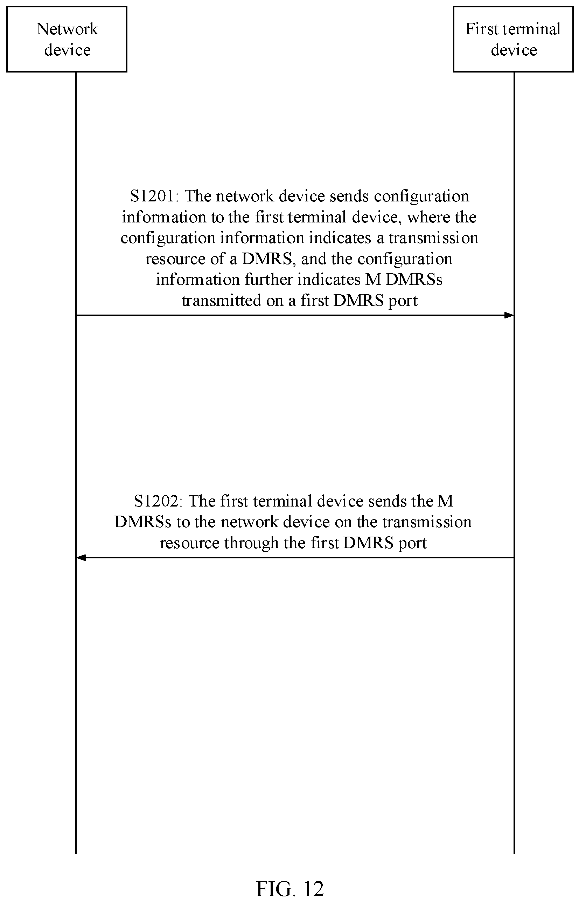

FIG. 12 is a schematic flowchart of another communication method according to an embodiment of this application. As shown in FIG. 12, the communication method includes the following steps S1201 and S1202. For a plurality of terminal devices, the method shown in FIG. 12 may be performed by a first terminal device and a network device. Alternatively, the method shown in FIG. 12 may be performed by a chip in the first terminal device and a chip in the network device. This is not limited in this embodiment of this application. In FIG. 12, an example in which the method is performed by the first terminal device and the network device is used for description. It should be noted that the first terminal device is one of the plurality of terminal devices. In this embodiment of this application, an example in which a pilot signal is a DMRS is used for description.

S1201: The network device sends configuration information to the first terminal device, where the configuration information indicates a transmission resource of a DMRS, and the configuration information further indicates M DMRSs transmitted on a first DMRS port. Correspondingly, the first terminal device receives the configuration information from the network device.

In this embodiment of this application, M is an integer greater than or equal to 1, and the first DMRS port is a DMRS port corresponding to the transmission resource.

S1202: The first terminal device sends the M DMRSs to the network device on the transmission resource through the first DMRS port. Correspondingly, the network device receives the M DMRSs from the first terminal device.

For example, there are a plurality of terminal devices, and the first terminal device is one of the plurality of terminal devices. A main difference between the method described in FIG. 12 and the method described in FIG. 9 lies in that execution bodies for sending the M DMRSs are different. In FIG. 9, the network device sends the M DMRSs to the first terminal device on the transmission resource through the first DMRS port. In FIG. 12, the first terminal device sends the M DMRSs to the network device on the transmission resource through the first DMRS port. For specific implementations of steps S1201 and S1202, refer to the specific implementations of steps S901 and S902. Details are not described herein again.

It may be learned that, based on the foregoing described method, the first terminal device may send the M DMRSs to the network device on the transmission resource of the DMRS through the first DMRS port. Correspondingly, the network device may receive the M DMRSs from the first terminal device on the transmission resource through the first DMRS port. Similarly, a second terminal device may send the M DMRSs to the network device on the transmission resource of the DMRS through the first DMRS port. Correspondingly, the network device may receive the M DMRSs from the second terminal device on the transmission resource through the first DMRS port. It may be understood that the plurality of streams of the plurality of terminal devices share one DMRS port, and each DMRS port corresponds to a scalar sequence whose length is a quantity of streams, to distinguish between different transmission streams, so that data transmission with a larger quantity of spatial streams can be supported. In addition, a data transmission capacity is increased without increasing additional DMRS overheads.

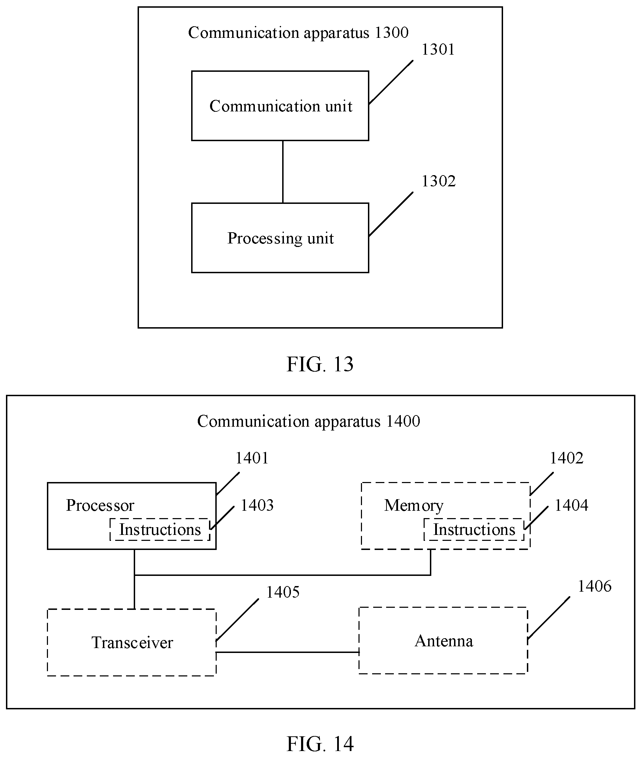

FIG. 13 is a diagram of a structure of a communication apparatus 1300 according to an embodiment of this application. The communication apparatus shown in FIG. 13 may be a terminal device or a network device, an apparatus in a terminal device or a network device, or an apparatus that can be used together with a terminal device or a network device. Specifically, as shown in FIG. 13, the communication apparatus 1300 may include a communication unit 1301 and a processing unit 1302. The processing unit 1302 is configured to perform data processing. The communication unit 1301 is configured to perform communication. Optionally, a receiving unit and a sending unit are integrated in the communication unit 1301. The communication unit 1301 may also be referred to as a transceiver unit. Alternatively, the communication unit 1301 may be split into a receiving unit and a sending unit.

In an implementation, when the communication apparatus 1300 may be a terminal device, or may be an apparatus in a terminal device, or may be an apparatus that can be used together with a terminal device,
the communication unit 1301 is configured to receive configuration information from a network device. The configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource.

The communication unit 1301 is further configured to send or receive the R DMRSs on the transmission resource through the first DMRS port, or send or receive the M DMRSs on the transmission resource through the first DMRS port.

In a possible implementation, the R DMRSs corresponding to the terminal device are different, and a sum of powers of the R DMRSs corresponding to the terminal device is 1. Alternatively, the M DMRSs corresponding to the terminal device are different, and a sum of powers of the M DMRSs corresponding to the terminal device is less than 1.

In a possible implementation, the transmission resource is of a comb structure, and two adjacent combs in the transmission resource have a same frequency domain spacing. When sending or receiving the R DMRSs on the transmission resource through the first DMRS port, or sending or receiving the M DMRSs on the transmission resource through the first DMRS port, the communication unit 1301 is specifically configured to: send or receive the R DMRSs on each comb in the transmission resource through the first DMRS port, or send or receive the M DMRSs on each comb in the transmission resource through the first DMRS port.

In a possible implementation, each comb includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{t} \left(l′\right) r \left(4n+k′\right) ,$ where
*q*(*s*) is a real pilot sequence or a complex pilot sequence, *R* represents a quantity of streams transmitted on the first DMRS port, *Z*(*R*) represents a normalization coefficient, *s* represents an *s*th DMRS, *w_{f}* (*k'*) represents a frequency-domain spreading sequence of the first DMRS port, *wₜ*(*l'*) represents a time-domain spreading sequence of the first DMRS port, and *r(4n + k')* represents a frequency-domain sequence of the transmission resource.

In a possible implementation, the transmission resource is of a non-comb structure, and the transmission resource includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) ,$ where
*q*(*s*) is a real pilot sequence or a complex pilot sequence, R represents a quantity of streams transmitted on the first DMRS port, *Z*(*R*) represents a normalization coefficient, and *s* represents an *s*th DMRS.

In a possible implementation, *q(s)* is a real pilot sequence, *q* (*s*) *=* 2*R* - 2*s* - 1, and R and *Z*(*R*) have a first association relationship.

In a possible implementation, *q*(*s*) is a complex pilot sequence, and *q*(*s*)*, R,* and *Z*(*R*) have a second association relationship.

In an implementation, when the communication apparatus 1300 may be a network device, or may be an apparatus in a network device, or may be an apparatus that can be used together with a network device,
the communication unit 1301 is configured to send configuration information to a terminal device. The configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource.

The communication unit 1301 is further configured to send or receive the R DMRSs on the transmission resource through the first DMRS port, or send or receive the M DMRSs on the transmission resource through the first DMRS port.

In a possible implementation, there is one terminal device, R DMRSs corresponding to one terminal device are different, and a sum of powers of the R DMRSs corresponding to one terminal device is 1.

In a possible implementation, there are a plurality of terminal devices, a total quantity of DMRSs corresponding to the plurality of terminal devices is R, the R DMRSs are different, and a sum of powers of the R DMRSs is 1. M DMRSs corresponding to a first terminal device are different, a sum of powers of the M DMRSs corresponding to the first terminal device is less than 1, the first terminal device is one of the plurality of terminal devices, and M is less than R.

In a possible implementation, the transmission resource is of a comb structure, and two adjacent combs in the transmission resource have a same frequency domain spacing. When sending or receiving the R DMRSs on the transmission resource through the first DMRS port, or sending or receiving the M DMRSs on the transmission resource through the first DMRS port, the communication unit 1301 is specifically configured to: send or receive the R DMRSs on each comb in the transmission resource through the first DMRS port, or send or receive the M DMRSs on each comb in the transmission resource through the first DMRS port.

In a possible implementation, each comb includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{t} \left(l′\right) r \left(4n+k′\right) ,$ where
*q*(*s*) is a real pilot sequence or a complex pilot sequence, *R* represents a quantity of streams transmitted on the first DMRS port, *Z*(*R*) represents a normalization coefficient, *s* represents an *s*th DMRS, *w_{f}* (*k'*) represents a frequency-domain spreading sequence of the first DMRS port, *wₜ*(*l'*) represents a time-domain spreading sequence of the first DMRS port, and *r* (4*n* + *k'*) represents a frequency-domain sequence of the transmission resource.

In a possible implementation, the transmission resource is of a non-comb structure, and the transmission resource includes a plurality of code domain resources; and the R DMRSs occupy one of the plurality of code domain resources, or the M DMRSs occupy one of the plurality of code domain resources.

In a possible implementation, the DMRS satisfies: ${{a}^{˜}}_{k , l}^{\left({p}_{j}\left|s, μ\right.\right)} = \frac{1}{\sqrt{Z \left(R\right)}} q \left(s\right) ,$ where
*q*(*s*) is a real pilot sequence or a complex pilot sequence, *R* represents a quantity of streams transmitted on the first DMRS port, *Z*(*R*) represents a normalization coefficient, and *s* represents an *s*th DMRS.

In a possible implementation, *q* (*s*) is a real pilot sequence, *q* (*s*) = 2*R* - 2*s* - 1, and *R* and *Z*(*R*) have a first association relationship.

In a possible implementation, *q*(*s*) is a complex pilot sequence, and *q*(*s*), *R*, and *Z*(*R*) have a second association relationship.

FIG. 14 is a diagram of a structure of another communication apparatus. The communication apparatus 1400 may be the terminal device or the network device in the foregoing method embodiments, or may be a chip, a chip system, a processor, or the like that supports the terminal device or the network device in implementing the foregoing method. The communication apparatus may be configured to implement the method described in the foregoing method embodiments. For details, refer to the descriptions in the foregoing method embodiments.

The communication apparatus 1400 includes one or more processors 1401. The processor 1401 may be a general-purpose processor, a dedicated processor, or the like. For example, the processor 1401 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1400 may include one or more memories 1402. The memory may store instructions 1404. The instructions may be run on the processor 1401, so that the communication apparatus 1400 performs the method described in the foregoing method embodiments. Optionally, the memory 1402 may further store data. The processor 1401 and the memory 1402 may be separately disposed, or may be integrated together.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1302 shown in FIG. 13 may be the processor 1401. The communication unit 1301 may be the transceiver 1405.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1401 may store instructions 1403. When the instructions 1403 are run on the processor 1401, the communication apparatus 1400 may be enabled to perform the method described in the foregoing method embodiments. The instructions 1403 may be built into the processor 1401. In this case, the processor 1401 may be implemented by using hardware.

In still another possible design, the communication apparatus 1400 may include a circuit, and the circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (P-type metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a terminal device or a network device. However, a scope of the communication apparatus described in embodiments of this application is not limited thereto, and the structure of the communication apparatus may not be limited by FIG. 14. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and an instruction;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

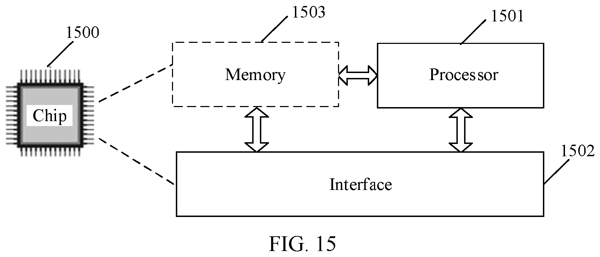

For a case in which the communication apparatus may be a chip or a chip system, refer to a diagram of a structure of a chip shown in FIG. 15. A chip 1500 shown in FIG. 15 includes a processor 1501 and an interface 1502. Optionally, the chip 1500 may further include a memory 1503. There may be one or more processors 1501, and there may be a plurality of interfaces 1502.

For a case in which the chip is configured to implement the terminal device or the network device in the embodiments of this application:
the interface 1502 is configured to receive or output a signal; and
the processor 1501 is configured to perform a data processing operation of the terminal device or the network device.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be understood that the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium. The storage medium stores a computer program or instructions. When the computer program or the instructions are executed by a communication apparatus, a function in any one of the foregoing method embodiments is implemented.

This application further provides a computer program product including instructions. When a computer reads and executes the computer program product, the computer is enabled to implement a function in any one of the foregoing method embodiments.

This application provides a communication system. The communication system includes a terminal device and a network device. The terminal device is configured to perform the method performed by the terminal device in the foregoing embodiments, and the network device is configured to perform the method performed by the network device in the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving configuration information from a network device, wherein the configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource; and
sending or receiving the R DMRSs on the transmission resource through the first DMRS port, or sending or receiving the M DMRSs on the transmission resource through the first DMRS port.

2. The method according to claim 1, wherein R DMRSs corresponding to a terminal device are different, and a sum of powers of the R DMRSs corresponding to the terminal device is 1; or
M DMRSs corresponding to the terminal device are different, and a sum of powers of the M DMRSs corresponding to the terminal device is less than 1.

3. The method according to claim 1 or 2, wherein the transmission resource is of a comb structure, and two adjacent combs in the transmission resource have a same frequency domain spacing; and
the sending or receiving the R DMRSs on the transmission resource through the first DMRS port, or sending or receiving the M DMRSs on the transmission resource through the first DMRS port comprises:
sending or receiving the R DMRSs on each comb in the transmission resource through the first DMRS port, or sending or receiving the M DMRSs on each comb in the transmission resource through the first DMRS port.

4. The method according to claim 3, wherein each comb comprises a plurality of code domain resources; and the R DMRSs occupy one of the plurality of code domain resources, or the M DMRSs occupy one of the plurality of code domain resources.

5. The method according to claim 3 or 4, wherein the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{t} \left(l′\right) r \left(4n+k′\right) ,$ wherein
*q* (*s*) is a real pilot sequence or a complex pilot sequence, *R* represents a quantity of streams transmitted on the first DMRS port, *Z*(*R*) represents a normalization coefficient, *s* represents an *s*th DMRS, *w_{f}*(*k'*) represents a frequency-domain spreading sequence of the first DMRS port, *wₜ*(*l*') represents a time-domain spreading sequence of the first DMRS port, and *r(4n + k')* represents a frequency-domain sequence of the transmission resource.

6. The method according to claim 1 or 2, wherein the transmission resource is of a non-comb structure, and the transmission resource comprises a plurality of code domain resources; and the R DMRSs occupy one of the plurality of code domain resources, or the M DMRSs occupy one of the plurality of code domain resources.

7. The method according to claim 6, wherein the DMRS satisfies: ${{a}^{˜}}_{k , l}^{\left({p}_{j}\left|s, μ\right.\right)} = \frac{1}{\sqrt{Z \left(R\right)}} q \left(s\right) ,$ wherein
*q*(*s*) is a real pilot sequence or a complex pilot sequence, R represents a quantity of streams transmitted on the first DMRS port, *Z*(*R*) represents a normalization coefficient, and *s* represents an *s*th DMRS.

8. The method according to claim 5 or 7, wherein *q*(*s*) is a real pilot sequence, *q(s)* = 2 *R* - 2 *s* - 1, and *R* and *Z (R)* have a first association relationship.

9. The method according to claim 5 or 7, wherein *q*(*s*) is a complex pilot sequence, and *q*(*s*), *R , and Z*(*R*) have a second association relationship.

10. A communication method, wherein the method comprises:
sending configuration information to a terminal device, wherein the configuration information indicates a transmission resource of a demodulation reference signal DMRS, the configuration information further indicates a quantity R of streams or M DMRSs transmitted on a first DMRS port, R is an integer greater than or equal to 1, M is an integer greater than or equal to 1, and the first DMRS port is a DMRS port corresponding to the transmission resource; and
sending or receiving the R DMRSs on the transmission resource through the first DMRS port, or sending or receiving the M DMRSs on the transmission resource through the first DMRS port.

11. The method according to claim 10, wherein there is one terminal device, R DMRSs corresponding to the terminal device are different, and a sum of powers of the R DMRSs corresponding to the terminal device is 1.

12. The method according to claim 10, wherein there are a plurality of terminal devices, a total quantity of DMRSs corresponding to the plurality of terminal devices is R, the R DMRSs are different, and a sum of powers of the R DMRSs is 1; and
M DMRSs corresponding to a first terminal device are different, a sum of powers of the M DMRSs corresponding to the first terminal device is less than 1, the first terminal device is one of the plurality of terminal devices, and M is less than R.

13. The method according to any one of claims 10 to 12, wherein the transmission resource is of a comb structure, and two adjacent combs in the transmission resource have a same frequency domain spacing; and
the sending or receiving the R DMRSs on the transmission resource through the first DMRS port, or sending or receiving the M DMRSs on the transmission resource through the first DMRS port comprises:
sending or receiving the R DMRSs on each comb in the transmission resource through the first DMRS port, or sending or receiving the M DMRSs on each comb in the transmission resource through the first DMRS port.

14. The method according to claim 13, wherein each comb comprises a plurality of code domain resources; and the R DMRSs occupy one of the plurality of code domain resources, or the M DMRSs occupy one of the plurality of code domain resources.

15. The method according to claim 13 or 14, wherein the DMRS satisfies: ${{a}^{˜}}_{k , l}^{\left({p}_{j}\left|s, μ\right.\right)} = \frac{1}{\sqrt{Z \left(R\right)}} q \left(s\right) {w}_{f} \left(k′\right) {w}_{t} \left(l′\right) r \left(4n+k′\right)$ *q*(*s*) is a real pilot sequence or a complex pilot sequence, *R* represents a quantity of streams transmitted on the first DMRS port, *Z*(*R*) represents a normalization coefficient, *s* represents an *s*th DMRS, *w_{f}*(*k'*) represents a frequency-domain spreading sequence of the first DMRS port, *wₜ*(*l'*) represents a time-domain spreading sequence of the first DMRS port, and *r*(4*n* + *k')* represents a frequency-domain sequence of the transmission resource.

16. The method according to any one of claims 10 to 12, wherein the transmission resource is of a non-comb structure, and the transmission resource comprises a plurality of code domain resources; and the R DMRSs occupy one of the plurality of code domain resources, or the M DMRSs occupy one of the plurality of code domain resources.

17. The method according to claim 16, wherein the DMRS satisfies: ${{a}^{˜}}_{k , l}^{\left({p}_{j}\left|s, μ\right.\right)} = \frac{1}{\sqrt{Z \left(R\right)}} q \left(s\right)$ *q*(*s*) is a real pilot sequence or a complex pilot sequence, *R* represents a quantity of streams transmitted on the first DMRS port, *Z*(*R*) represents a normalization coefficient, and *s* represents an *s*th DMRS.

18. The method according to claim 15 or 17, wherein *q*(*s*) is a real pilot sequence, *q*(*s*) = 2*R* - 2*s* - 1, and *R* and *Z*(*R*) have a first association relationship.

19. The method according to claim 15 or 17, wherein *q*(*s*) is a complex pilot sequence, and *q* (*s*), *R* , and *Z*(*R*) have a second association relationship.

20. A communication system, comprising a terminal device and a network device, wherein the terminal device is configured to perform the method according to any one of claims 1 to 9, and the network device is configured to perform the method according to any one of claims 10 to 19.

21. A communication apparatus, comprising a unit configured to perform the method according to any one of claims 1 to 9, or comprising a unit configured to perform the method according to any one of claims 10 to 19.

22. A communication apparatus, comprising a processor and a memory, wherein the processor is coupled to the memory, and the processor is configured to implement the method according to any one of claims 1 to 9, or the processor is configured to implement the method according to any one of claims 10 to 19.

23. A chip, comprising a processor and an interface, wherein the processor is coupled to the interface, the interface is configured to receive or output a signal, and the processor is configured to execute code instructions, to perform the method according to any one of claims 1 to 9, or to perform the method according to any one of claims 10 to 19.

24. A computer-readable storage medium, wherein the computer-readable storage medium stores computer-executable instructions, and when the computer-executable instructions are invoked by a computer, the computer is enabled to perform the method according to any one of claims 1 to 9, or the computer is enabled to perform the method according to any one of claims 10 to 19.
